# EUROPÄISCHE PATENTSCHRIFT

(11) **EP 0 688 282 B1**
(45) Veröffentlichungstag und Bekanntmachung des Hinweises auf die Patenterteilung: **14.10.1998**
(21) Anmeldenummer: 95904374.6
(22) Anmeldetag: 11.01.1995
(51) Int. Cl.: B62J 6/00, B62J 6/06

(54) **FAHRRADBELEUCHTUNGSSYSTEM UND GENERATOR**
BICYCLE LIGHTING SYSTEM AND GENERATOR
SYSTEME D'ECLAIRAGE POUR BICYCLETTES ET GENERATEUR

(30) Priorität: 11.01.1994 CH 74/94
(43) Veröffentlichungstag der Anmeldung: 27.12.1995
(73) Patentinhaber: Schwaller, Edwin, 5024 Küttigen (CH)
(72) Erfinder: Schwaller, Edwin, 5024 Küttigen (CH)
(74) Vertreter: Schwabe, Hans-Georg, Dipl.-Ing.
(86) Internationale Anmeldenummer: CH9500004
(87) Internationale Veröffentlichungsnummer: WO9518739

(56) Entgegenhaltungen:
- EP-A- 0 460 585
- EP-A- 0 528 347
- WO-A-81/01274
- DE-U- 9 206 609
- FR-A- 2 464 175
- GB-A- 2 126 438
- GB-A- 2 161 040

## Beschreibung

Die vorliegende Erfindung betrifft ein Fahrradbeleuchtungssystem mit einem von einem fahrenden Fahrrad antreibbaren und an diesem angebrachten Dynamosystem, wenigstens einem Vorderlicht, wenigstens einem Rücklicht, die jeweils vom Dynamosystem mit elektrischer Leistung gespeist werden, und mit einer Elektronikanordnung, die vom Dynamosystem erzeugte elektrische Leistung zur Lichterzeugung und zum Laden einer aufladbaren Akkumulatorenbatterie in eine geregelte Gleichspannung umsetzt. Die Erfindung betrifft auch einen Generator für allgemeine Anwendungen, insbesondere jedoch zur Verwendung als Fahrraddynamo.

Herkömmliche und auf dem Markt befindliche Fahrradbeleuchtungssysteme müssen hinsichtlich der elektrischen Leistung und Spannung die gesetzlich vorgeschriebenen Normen erfüllen. Letztere schreiben für die den Beleuchtungskörpern anliegende Ausgangsspannung des Dynamos bei 15 km/h und darüber hinaus eine maximale Spannung von 7 V vor. Der Mindestwert der Dynamoausgangsspannung darf laut gesetzlicher Vorschrift zwischen 5 km/h (3 V) bis 15 km/h (5,8 V) und darüber hinaus nicht abfallen. Aufgrund dieser Vorschriften erlauben es die heutigen Systeme lediglich 1,4 W Leistung bei einer Fahrgeschwindigkeit von 5 bis 6 km/h zu erbringen. Würde man diese Leistung bei den heute üblichen Dynamosystemen erhöhen, so wäre es physikalisch unmöglich bei 15 km/h und darüber hinaus die gesetzlich vorgeschriebene Maximalspannung von 7 V einzuhalten. Nur durch Belastungsmassnahmen wäre es möglich, das Ueberschreiten der gesetzlichen Maximalwerte zu verhindern. Dies hätte zur Folge, dass die Verlustleistung stark ansteigen und der Wirkungsgrad sich erheblich verschlechtern würde.

Folglich sind herkömmliche Fahrradbeleuchtungssysteme im unteren Geschwindigkeitsbereich für die Ladung einer für die Anfahrlichterzeugung bzw. für die Standlichterzeugung vorgesehenen Akkumulatorenbatterie nicht zusätzlich belastbar. Erst ab einer Fahrgeschwindigkeit von ca. 15 km/h erzeugen herkömmliche Dynamosysteme genügend Leistung, die für das Laden der Akkumulatorenbatterie genutzt werden könnte, da der Wirkungsgrad herkömmlicher Systeme unterhalb der genannten Fahrgeschwindigkeit von ca. 15 km/h sehr gering ist. Bekanntlich haben Seitendynamos einen Wirkungsgrad von etwa 17% bis 24%, Walzendynamos höchstens 35%, und Nabendynamos einen Wirkungsgrad von etwa 40%. Oberhalb der Fahrgeschwindigkeit von 15 km/h sinkt durch die Leistungsaufnahme beim Laden der Akkumulatorenbatterie der Wirkungsgrad zusätzlich ab. Durch diesen Umstand muss der Radfahrer zusätzlich Kraft für die Betätigung des Dynamos aufwenden.

Eine "Sicherheitsbeleuchtungsanlage für Fahrräder" dieser Art ist in der FR-A-2 464 175 offenbart. Diese Beleuchtungsanlage basiert auf dem herkömmlichen 3W/6V Dynamo mit Unterstützung von nicht nachladbaren Batterien für die Standlichterzeugung. Es wird zwischen zwei Zuständen, nämlich 'Betrieb' und 'Halt', unterschieden, indem die Energieversorgung bei unterschiedlicher Geschwindigkeit entweder vom Dynamo und von den Batterien zusammen oder nur ab Dynamo erfolgt. Die Elektronik, die manuell ein- und ausgeschaltet werden muss, umfasst im wesentlichen einen Schwellwert-Steuerkreis und einen Relais-Umschaltsteuerkreis. Mit dem Handumschalter in der Position 'Betrieb' wird die Sicherheitsbeleuchtungsanlage aktiviert, wobei der Dynamo zugeschaltet wird. In der anderen Position 'Halt' wird der Dynamo direkt mit den Fahrradlampen verbunden. Dafür wird die Sicherheitsbeleuchtung ausgeschaltet (kein Standlicht), was einer konventionellen Beleuchtung entspricht.

Zwischen Stillstand und 9,6 km/h hält der Schwellwert-Steuerkreis den Relais-Umschaltsteuerkreis in unerregter Ruhelage. Die Anschlussklemmen des Dynamos sowie der 1,5 V Batterien sind jetzt mit den Anschlussklemmen der Fahrradlampen verbunden. Einerseits werden die Lampen von den Batterien und andererseits von den positiven Halbwellen des Dynamos polaritätsgleich zu der Batteriespannung gespiesen, sofern diese Halbwellen den Spannungsbetrag der Batterien übersteigen. Beim Stillstand werden die Lampen solange von der Batterie-Energie gespiesen, bis der Handumschalter auf Position 'Halt' gestellt oder das Fahrrad wieder in schnelle Fahrt, d.h. oberhalb einer bestimmten Schwelle, versetzt wird.

Ab 9,6 km/h bringt der Schwellwertschalter-Steuerkreis den Relais-Umschaltsteuerkreis in erregten Zustand. Damit wird die Verbindung der Anschlussklemmen der Batterien zu den Lampen getrennt, die nunmehr vom Dynamo weiter gespiesen werden. Sinkt die Geschwindigkeit unter 6,3 km/h, so kippt der Schwellwertschalter-Steuerkreis wieder in die Anfangslage zurück und bringt den Relais-Umschaltsteuerkreis in die Ruhelage. Die Lampen werden wieder von den Batterien gespiesen. Die bestehende Hysterese im Umschaltbereich von 6,3 km/h und 9,3 km/h verhindert, dass der Schwellwert-Steuerkreis hin und her flattert.

Der damalige Vorteil bzw. Fortschritt dieser Sicherheitsbeleuchtungsanlage für Fahrräder liegt in der Standlichterzeugung und in der Energieversorgung zusätzlich aus den Batterien während der Anfahrphase. Diese bekannte Fahrradlichtanlage ist aber in jeder Beziehung sehr aufwendig: Abgesehen vom üblichen 3W/6V Dynamo ist die Anlage in einem separat am Fahrrad zu montierenden Kasten untergebracht.

Die Batterien sind zwischen Stillstand und 9,6 km/h bzw. zwischen 6,3 und 9,6 km/h in Betrieb und somit relativ rasch entladen. Keine Batteriekurzschluss-Begrenzung ist vorgesehen. Die Batterie-Kontrolle wird manuell über einen Taster/Unterbrecher vorgenommen. Toleranzen und das Temperaturverhalten der dafür vorgesehenen Leuchtdiode ergeben eine unpräzise Messung. Der Dynamo und die Fahrradlampen sind einzeln anzuschliessen an den Kasten mit der 'Elektronik' samt den in Reihe geschalteten Batterien.

Die Verwendung von ab Netz nachladbaren Batterien brächte praktisch keinen Vorteil. Abgesehen vom ständigen Ein- und Ausbau der Batterien, würde die Aufladung ab Netz mehrere Stunden erfordern. Schliesslich wäre zu vermerken, dass das Nachladen ab Dynamo gar nicht vorgesehen ist, da die Leistung des 3W/6V Dynamos schlicht zu klein ist. Zudem wird der Wirkungsgrad des Dynamos durch den Einsatz von Schwellwertschalter-Steuerkreis, Relais-Umschaltsteuerkreis, Spulen etc. zusätzlich reduziert.

Im weitern ist in der EP-A-0 528 347 eine "Elektrische Maschine, insbesondere Radnabendynamo" beschrieben. Diese elektrische Maschine weist eine zentrale Permanentmagnetanordnung und eine diese koaxial umgebende Spulenanordnung auf, die relativ zueinander rotierbar sind. Ein rotierender Innenkreis des Radnabendynamos besteht aus einem Eisenkern mit sternförmig aufgebrachten Permanentmagneten. Dies entspricht einem weithin bekannten Siemens-Prinzip aus dem Jahr 1948. Ein stehender Aussenkreis ist mit der Spule fest verbunden. Das Magnetfeld rotiert somit zum stehenden Aussenkreis und zur Spule, was grössere Magnetverluste (Ummagnetisierungsverluste) erzeugt. Der Aussenkreis besteht aus einzelnen, verklebten, isolierten Blechstanzringen, die aneinander gereiht sind.

Zwischen den Polen (Magneten) und der Spule besteht nur ein Luftspalt. Zwischen der Spule und dem Aussenring besteht kein Luftspalt. Der Aussenkreis hat keine Polschuhe, da das Magnetfeld rotierend ist und wandert. Dadurch entstehen die obenerwähnten Ummagnetisierungsverluste. Die Spule des Radnabendynamos ist ein mäanderförmig gewickeltes Band.

Beim Radnabendynamo ist eine konventionelle Drosselanordnung oder eine elektronische Spannungsbegrenzervorrivhtung erforderlich. Die Elektronik ist nicht weiter spezifiziert. Die Zielsetzung bei der Entwicklung dieser elektrischen Maschine dürfte sein, damit einen standardmässig genormten Dynamo zu schaffen, der in die Radnabe passt und einen etwas höheren Wirkungsgrad erbringt. Der angegebene Gesamtwirkungsgrad der Stromerzeugung von über 0.5 wird bei diesem Stand der Technik kaum erreichbar sein. Der Dynamo weist zudem ein Uebersetzungsgetriebe auf, welches einesteils notwendig ist, den Wirkungsgrad jedoch herabsetzt. Ausserdem ist der Radnabendynamo bezüglich des Innenwiderstands sowie des dynamischen Verhaltens leider nicht spezifiziert. Es darf angenommen werden, dass der Wirkungsgrad bestenfalls 40% erreicht.

Fachkreise haben diesen geringen Wirkungsgrad immer wieder bemängelt und dabei erkannt, dass die herkömmlichen Dynamos und Fahrradbeleuchtungssysteme nicht dem Stand des heutigen Wissens entsprechen.

Es ist deshalb eine Aufgabe der vorliegenden Erfindung, ein dem Stand der heutigen Technik und den realen Anforderungen angepasstes Fahrradbeleuchtungssystem in Kombination mit einem Generator zu schaffen, welches überdies eine wirtschaftlich günstige Lösung sein soll.

Eine weitere Aufgabe der vorliegenden Erfindung besteht darin, ein Dynamosystem zu schaffen, welches hinsichtlich seiner Konstruktion, seiner Leistungsmerkmale und seiner Herstellungskosten die an das erfindungsgemässe Fahrradbeleuchtungssystem gestellten Anforderungen erfüllt.

Zur Lösung der obigen Aufgaben liegt der vorliegenden Erfindung die Erkenntnis zugrunde, dass ein zufriedenstellendes Fahrradbeleuchtungssystem nur mit einem Dynamogenerator realisiert werden kann, der einen beträchtlich erhöhten Wirkungsgrad aufweist.

Erfindungsgemäss ist ein gattungsgemässes Fahrradbeleuchtungssystem dadurch gekennzeichnet, dass das Dynamosystem einen Dynamogenerator aufweist, der so angeordnet und aufgebaut ist, dass er ab einer Mindestfahrgeschwindigkeit von etwa 5 bis 7 km/h eine zum Laden der aufladbaren Akkumulatorenbatterie und gleichzeitig zur Speisung des Vorderlichts und des Rücklichts ausreichende elektrische Leistung erzeugt, dass die Elektronikanordnung einen Wandler aufweist, der eine auf- und abwärts wandelnde Funktion hat, und dass die Elektronikanordnung zusätzlich von der Akkumulatorenbatterie gespeist wird, solange die Mindestfahrgeschwindigkeit unterschritten wird.

In einer bevorzugten Ausführungsform weist der Wandler der Elektronikanordnung eine Spannungswandler- und Energiebegrenzervorrichtung und eine eine gleichgerichtete Dynamoausgangsspannung erfassende Schwellwertvorrichtung auf, wobei, wenn die Schwellwertvorrichtung ein Ueberschreiten einer bestimmten Mindestspannung des Dynamogenerators erfasst, die von der Akkumulatorenbatterie gelieferte Spannung über eine elektronische Schaltvorrichtung zusätzlich zur gleichgerichteten Ausgangsspannung des Dynamogenerators der Spannungswandler- und Energiebegrenzervorrichtung zugeführt wird, und wobei die Ausgangsspannung der Spannungswandler- und Energiebegrenzervorrichtung bei Batteriebetrieb in einem ersten, konstanten Ausgangsspannungsbereich und bei Dynamobetrieb in einem zweiten, konstanten Ausgangsspannungsbereich liegt, der oberhalb des ersten konstanten Ausgangsspannungsbereich liegt. Dabei wird eine Batterieladevorrichtung oberhalb einer zwischen dem ersten und dem zweiten Ausgangsspannungsbereich liegenden Ausgangsladespannung aktiviert.

Der erste, konstante Ausgangsspannungsbereich der Elektronikanordnung liegt vorzugsweise in einem fest eingestellten Bereich von 4,5 bis 6 V. Der Eingangsspannungsbereich des Wandlers liegt bei dieser Betriebsart zwischen 0,8 V minimaler Schwellwertspannung und einer maximalen Umschaltspannung von 4,8 V.

Der zweite, konstante Ausgangsspannungsbereich der Elektronikanordnung liegt vorzugsweise in einem Bereich zwischen 6,2 und 7 V, am besten über 6,4 V. Bei dieser Betriebsart liegt der Eingangsspannungsbereich des Wandlers in einem Bereich ab ca. 5 V bis maximal 80 V bei etwa 80 km/h.

Bei dieser erfindungsgemässen Einstellung der Elektronikanordnung wird die gesetzliche Norm bei jeder Geschwindigkeit ideal erfüllt. Die Kombination eines Dynamogenerators mit hohem Wirkungsgrad mit der Elektronikanordnung und der aufladbaren Akkumulatorenbatterie ermöglicht ein kombiniertes Batterielade-, Standlicht- und Fahrtbeleuchtungssystem. Die Elektronikanordnung wird sowohl von der Akkumulatorenbatterie als auch direkt vom Dynamogenerator betrieben.

Die Spannungswandler- und Energiebegrenzervorrichtung begrenzt die Ausgangsleistung der Elektronikanordnung konstant auf 4 W bis 6 W, vorzugsweise auf 4,5 W bis 5 W. Dadurch ist auch die Kurzschluss-Sicherheit der aufladbaren Batterie, des Dynamogenerators sowie des Dynamosystems gewährleistet.

In einer weiteren bevorzugten Ausbildungsform weist die Elektronikanordnung weiterhin auf: (a) eine Gleichrichterschaltung zur Erzeugung einer gleichgerichteten und geglätteten Dynamoausgangsspannung, die der Spannungswandler- und Energiebegrenzervorrichtung zugeführt wird; (b) ein erstes Spannungsteilernetzwerk, das eine erste, gleichgerichtete und zur Fahrgeschwindigkeit proportionale Ausgangsspannung des Dynamogenerators in eine erste Teilspannung umsetzt und diese Teilspannung einem ersten Schwellwertschalter zuführt; (c) ein zweites Spannungsteilernetzwerk, das die gleichgerichtete, zur Fahrgeschwindigkeit proportionale Ausgangsspannung des Dynamogenerators in eine zweite Teilspannung umsetzt und diese Teilspannung einem zweiten Schwellwertschalter zuführt, wobei der erste Schwellwertschalter die Batteriespannung der Spannungswandler- und Energiebegrenzervorrichtung über die elektronische Schaltvorrichtung anlegt, wenn die gleichgerichtete Ausgangsspannung des Dynamogenerators eine erste, vom ersten Schwellwertschalter erfasste Schwellenspannung überschritten hat, und der zweite Schwellwertschalter der Spannungswandler- und Energiebegrenzervorrichtung ein Signal zum Umschalten ihrer Ausgangsspannung von der ersten zur zweiten, konstanten Ausgangsspannung und umgekehrt jeweils bei einem vom zweiten Schwellwertschalter erfassten Unterschreiten bzw. Ueberschreiten einer zweiten Schwellenspannung zuführt; (d) einen mit dem Ausgang des ersten Schwellwertschalters und mit der elektronischen Schaltvorrichtung verbundenen Verzögerungskreis, der, wenn die gleichgerichtete Ausgangsspannung des dynamogenerators die erste Schwellenspannung unterschreitet, nach Ablauf einer vorgegebenen Zeitdauer, zum Beispiel vier Minuten, die elektronische Schaltvorrichtung öffnet, um die Spannung der Batterie vom Eingang der Spannungswandler- und Energiebegrenzervorrichtung abzuschalten; und (e) einen Batterieladewandler, der ausgangsseitig mit der Spannungswandler- und Energiebegrenzervorrichtung gekoppelt ist und der auch bei Batteriebetrieb zum Laden der Akkumulatorenbatterie aktiviert bleibt.

Der erste Schwellwertschalter schaltet die Batteriespannung bei einer Schwellwertspannung von ca. 0,8 V über die elektronische Schaltvorrichtung ein.

Der Batterieladewandler arbeitet bei einer Ausgangsspannung von 6,1 V bis maximal 7 V proportional zunehmend mit erhöhter Leistungsumwandlung in Abhängigkeit vom Ladezustand der Akkumulatorenbatterie.

Um die vom Dynamosystem geforderten Eigenschaften sicherzustellen, ist ein Dynamogenerator vorgesehen, der einen hohen Wirkungsgrad und einen sehr kleinen Spulen-Innenwiderstand aufweist und der bereits bei einer Fahrgeschwindigkeit von etwa 5 bis 7 km/h eine Ausgangsleistung von mindestens 4,5 W bei einer kleinen Ausgangsspannung erzeugt, wobei die Elektronikanordnung diese Ausgangsleistung des Dynamogenerators in eine Ausgangsspannung von 6,2 V bis 7 V um wandelt.

Um den hohen Wirkungsgrad zu erzielen, weist der Dynamogenerator einen Innenkreis und einen Aussenkreis auf, die beide synchron und gleichsinnig rotierend um eine festliegende, eisenlose Spule gelagert sind. Der Innenkreis und der Aussenkreis weisen jeweils n Pole in identischer Polteilung auf.

Dadurch, dass man einen Innenkreis und einen Aussenkreis synchron und gleichsinnig um eine festliegende, eisenlose Spule rotieren lässt, wird - in Verbindung mit modernen starken Magneten sowie einem extrem niedrigen Innenwiderstand der eisenlosen Spule, der vorzugsweise kleiner als 1,5 Ohm ist - eine hohe Feldstärke bei kleinem Eisen- und Magnetvolumen und bei kleinen Ummagnetisierungsverlusten erreicht. Der effektiv wirksame Magnetkreis besteht aus zwei Teilkreisen.

Der Innenkreis weist n innere Polschuhe auf und an jedem inneren Polschuh sind seitlich zwei Magnetpole gleichpolig angeordnet. Dadurch projizieren sich die beiden Magnetflächen auf die entsprechende Polschuhfläche. Da die beiden Magnetflächen vorzugsweise wesentlich grösser als die entsprechende Polschuhfläche sind, verdichtet sich der magnetische Fluss entsprechend auf die Polschuhfläche.

Ferner hat diese Anordnung den Vorteil, dass die Polschuhe des Innenkreises eine relativ geringe Masse aufweisen und dadurch eine Gewichtsreduzierung ermöglichen. Der Magnetfluss teilt sich über den Aussenkreis in zwei Teile auf die gegenüberliegenden äusseren Polschuhe auf.

Der Aussenkreis weist ebenfalls n, den inneren Polschuhen gegenüberliegend und zu diesen nasenförmig vorspringende äussere Polschuhe auf, die so geformt sind, dass jeder Luftspalt zwischen einander zugeordneten inneren und äusseren Polschuhen für den Magnetfluss der kürzeste Weg ist. Dadurch reduziert sich vorteilhafterweise der magnetische Streufluss.

Um die gegenseitige Beeinflussung der gleichpoligen Magnete zu verringern, ist jeder innere Polschuh in der Mitte durch einen einen Luftspalt erzeugenden Schlitz in radialer Richtung in zwei gleiche Teile unterteilt. Diese Anordnung ergibt den zusätzlichen Vorteil eines kleineren Polschuhvolumens sowie den Vorteil grösserer Magnethöhen, d.h. dass zwei halbe Magnetlängen je Pol bei gleichzeitig kleinstem Magnetvolumen und doppelter Magnetoberfläche möglich sind.

Der Luftspalt in den inneren Polschuhen reduziert die gegenseitige Beeinflussung der beiden gleichpoligen Magnetstirnflächen, da der magnetische Fluss je hälftig über den Polschuh an den Aussenkreis gleitet. Die beiden Magnetflüsse in jedem inneren Polschuh haben einen optimal kurzen Magnetkreisweg. Mit anderen Worten, es ergibt sich ein optimaler Magnetfluss. Ein weiterer Vorteil ist, dass ein kleiner Generator mit sehr hohen Flussdichten bei gleichzeitig geringem Gewicht, kleinem Magnetvolumen und hohem Wirkungsgrad gebaut werden kann. Der mit dem erfindungsgemässen Dynamogenerator des erfindungsgemässen Fahrradbeleuchtungssystems erreichbare Wirkungsgrad beträgt mindestens 90%.

Damit ergibt sich beispielsweise der effektive Wirkungsgrad des gesamten Fahrradbeleuchtungssystems gemäss der Erfindung bei 3 W Lichtleistung und 1 W Batterie-Ladeenergie, bezogen auf 3 W, zu 60% bei entladener Akkumulatorenbatterie und zu 80% bei geladener Akkumulatorenbatterie.

Vorteilhaft ist weiterhin, dass die eisenlose Spule eine sehr kleine Induktivität (kleiner als 150 uH) aufweist.

Dadurch wird eine zu vernachlässigende Gegeninduktivität erzeugt, wodurch die Polfühligkeit kaum oder gar nicht spürbar ist, bei gleichzeitig kleinsten Induktionsverlusten.

Vorzugsweise wird die eisenlose Spule je Polfeld in zwei gleiche, polrichtig in Reihe geschaltete Teilspulen aufgeteilt.

Obwohl die vorliegende Erfindung insbesondere auf ein Fahrradbeleuchtungssystem gerichtet ist, betrifft die Erfindung - wie eingangs erwähnt - auch einen Generator für andere Anwendungen.

Der erfindungsgemässe Generator mit einem Aussenkreis und einem Innenkreis, die beide synchron und gleichsinnig rotierend um einen festliegenden Stator gelagert sind und jeweils n Pole in identischer Polteilung aufweisen, ist dadurch gekennzeichnet, dass der Stator eine zwischen dem Aussenkreis und dem Innenkreis angeordnete ortsfeste eisenlose Spule ist, dass der Innenkreis n innere Polschuhe aufweist und Magnete derart angeordnet sind, dass sie jeweils gleichpolig an beiden Seiten jedes inneren Polschuhs anliegen, und dass der Aussenkreis n den inneren Polschuhen gegenüberliegend und zu diesen nasenförmig vorspringende äussere Polschuhe aufweist, so dass ein zwischen einander zugeordneten inneren und äusseren Polschuhen jeweils gebildeter Luftspalt der kürzeste Weg für den Magnetfluss ist. Die Magnete sind vorzugsweise Permanentmagnete.

Jeder innere Polschuh weist in der Mitte einen einen Luftspalt erzeugenden Schlitz in radialer Richtung auf, um die gegenseitige Beeinflussung der beiden seitlich am inneren Polschuh gleichpolig anliegenden Magnete zu reduzieren. Die Summe der an jedem inneren Polschuh anliegenden Flächen der beiden seitlichen Magnete ist vorzugsweise grösser als die äussere periphere Fläche jedes inneren Polschuhs. Die ortsfeste eisenlose Spule ist je Polfeld in zwei gleiche, polrichtig in Serie geschaltete Teilspulen aufgeteilt.

Die Polschuhe des Innenkreises bestehen vorzugsweise aus Weicheisen, während der innere Magnetkreis von einem eisenlosen Träger abgestützt wird. Der Aussenkreis besteht insgesamt aus Weicheisen.

Die erfindungsgemässen Merkmale der Magnetanordnung und des Magnetkreisaufbaus lassen sich mit Vorteil auch für Elektromotoren einsetzen.

Weitere Merkmale, Eigenschaften und Vorteile des erfindungsgemässen Fahrradbeleuchtungssystems sowie des erfindungsgemässen Generators werden nachfolgend anhand der Zeichnungen näher erläutert. Darin zeigen schematisch:
- Fig. 1a und 1b: einen Querschnitt durch eine bevorzugte Ausführungsform eines Dynamogenerators;
- Fig. 2a und 2b: jeweils eine innere Magnetkreisanordnung und die Anordnung einer eisenlosen Spule in perspektivischer Querschnittsdarstellung und in einer gestreckten Darstellung der Spulenanordnung;
- Figur 3: ein Blockschaltbild einer bevorzugten Ausführungsform der Elektronikanordnung für das Fahrradbeleuchtungssystem gemäss der vorliegenden Erfindung;
- Fig. 4a bis 4e: ein Spannung+Geschwindigkeit/Zeit-Diagramm und vier Spannung/Zeit-Diagramme zur Erläuterung der Funktion des Fahrradbeleuchtungssystems;
- Fig. 5a bis 5c: Spannung/Geschwindigkeit-Diagramme, die den erfindungsgemäss erreichten Verlauf der Ausgangsspannung zeigen, und zwar für den Betrieb bei Batterieausfall (Fig. 5a) und für den Betrieb mit Batterieeinsatz (Fig. 5c);
- Figur 6: ein ausgeführtes Beispiel der Elektronikanordnung des Fahrradbeleuchtungssystems mittels eines kundenspezifischen, integrierten, monolithischen Schaltkreises;
- Figur 7: eine Längsschnittdarstellung durch eine erste Ausführungsform des Dynamosystems als Seitendynamo; und
- Figur 8: eine Längsschnittdarstellung durch eine zweite Ausführungsform des Dynamosystems als Walzendynamo.

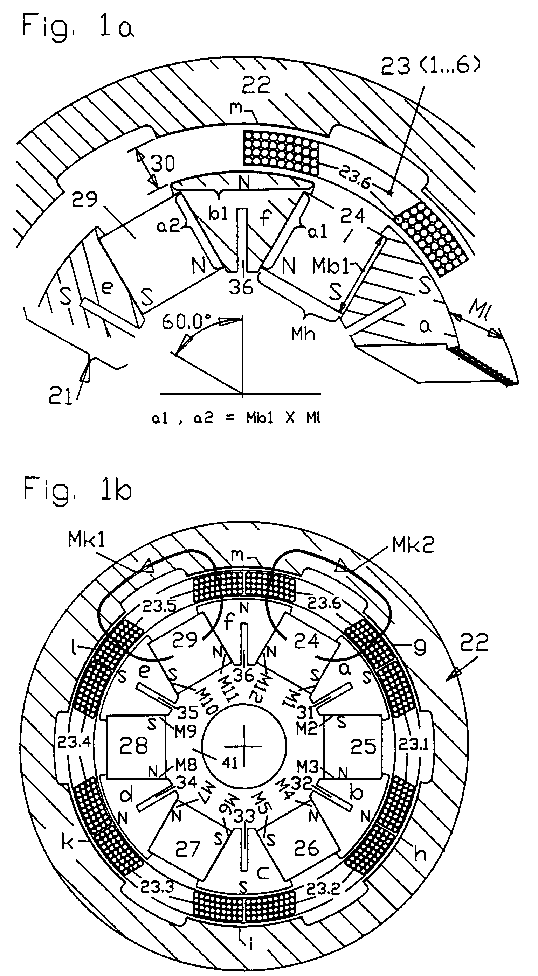

Die in den Figuren 1a und 1b gezeigte Ausführungsform eines erfindungsgemäss eingesetzten Dynamogenerators 1 weist in konzentrischer Anordnung von innen nach aussen einen rotierenden Innenkreis 21, eine ortsfeste eisenlose Spule 23 (23.1 bis 23.6) und einen synchron mit dem Innenkreis 21 rotierenden Aussenkreis 22 auf. Bei dem in der Figur 1b gezeigten Ausführungsbeispiel haben der Innenkreis 21 und der Aussenkreis 22 jeweils sechs einander gegenüberliegende Pole a-f und g-m in identischer Polteilung, so dass sich ein Polteilungswinkel von 60° ergibt. Die sechs Pole a-f des Innenkreises 21 sind in Form von sechs Polschuhen ausgebildet, während die Pole g-m des Aussenkreises 22 in Form von ebenfalls sechs Polschuhen ausgebildet sind, die den Polschuhen a-f des Innenkreises 21 gegenüberliegen und zu diesen nasenförmig vorspringen, so dass ein möglichst kleiner Luftspalt 30 entsteht. Die Polschuhe a-f des Innenkreises 21 bestehen aus Weicheisen, während ein Träger 41 des inneren Magnetkreises selbst eisenlos ist. Der Aussenkreis 22 besteht insgesamt aus Weicheisen. Die Polzahl sechs stellt selbstverständlich nur ein bevorzugtes beispiel dar.

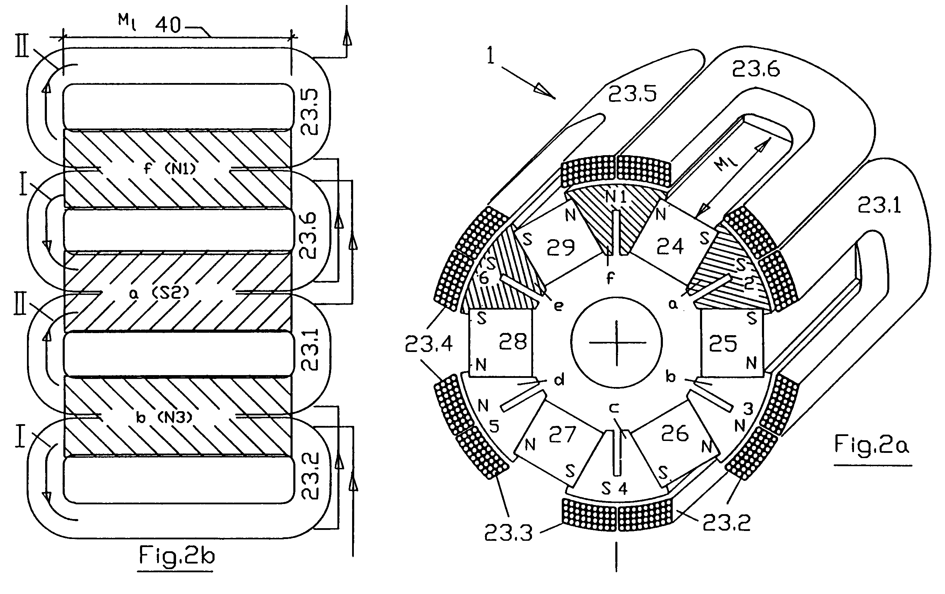

Zwischen den Polschuhen a-f des Innenkreises 21 sind sechs Permanentmagnete 24-29 so angeordnet, dass sie jeweils gleichpolig an beiden Seiten jedes Polschuhs anliegen. Das führt dazu, dass sich die beiden Magnetflächen, die in der Figur 1a bei den Magneten 24 und 29 mit a₁ bzw. a₂ (Magnetbreite) angedeutet sind, auf eine Polschuhfläche b₁ des Polschuhs f projizieren. Die senkrecht zur Papierebene der Figur 1a liegenden Magnetlängen M₁ (Figuren 2a und 2b) der Magnete 24-29 und die gesamte Anordnung sind so gewählt, dass die Summe der jeweiligen Magnetflächen a₁+a₂ wesentlich grösser als die jeweilige Polschuhfläche b₁ ist. Dadurch verdichtet sich der magnetische Fluss entsprechend auf die periphere Polschuhfläche b₁. Diese Anordnung hat weiter den Vorteil, dass die Polschuhe a-f des Innenkreises 21 eine relativ geringe Masse aufweisen, was eine Gewichtsreduzierung ermöglicht.

Dennoch hat der gesamte rotierende Teil des Dynamogenerators 1, hauptsächlich durch den rotierenden Aussenkreis 22, ein relativ grosses Trägheitsmoment, so dass das Radschlupfverhalten verbessert ist.

Der Magnetfluss teilt sich über die nasenförmig vorspringenden Polschuhe g-m des Aussenkreises 22 in zwei Teile Mk1 und Mk2 (Figur 1b) auf. Durch die nasenförmige und an die Spulenperipherie angepasste Form der Polschuhe g-m des Aussenkreises 22 ergibt sich der Luftspalt 30, wie er zwischen einem Polschuhpaar, nämlich f und m, angedeutet ist, als der kleinste Weg für den Magnetfluss. Dadurch reduziert sich der magnetische Streufluss.

Um die gegenseitige Beeinflussung der an beiden Seiten der inneren Polschuhe a-f anliegenden gleichpoligen Magnete zu reduzieren, ist jeder innere Polschuh a-f in der Mitte durch einen radialen Luftspalt 31-36 geschlitzt. Der Vorteil dieser Anordnung ist ein kleines Polschuhvolumen bei gleichzeitig grossen Magnethöhen, d.h. zwei Magnetbreiten je Pol bei gleichzeitig kleinstem Magnetvolumen und doppelter Magnetoberfläche.

Die radialen Luftspalte 31-36 in den inneren Polschuhen a-f verhindern die gegenseitige Beeinflussung der beiden gleichpoligen Magnetstirnflächen, da der magnetische Fluss je hälftig über den Polschuh an den Aussenkreis 22 fliesst. Die beiden Magnetflüsse in einem Polschuh haben einen optimal kurzen Magnetkreisweg (Mk1 und Mk2), d.h. es ergibt sich ein optimaler Magnetfluss. Ein weiterer Vorteil ist, dass auf diese Weise ein kleiner Dynamogenerator 1 mit extrem hoher Flussdichte, geringem Gewicht und Magnetvolumen, homogener Luftspaltinduktion und einem sehr hohen Wirkungsgrad realisiert werden kann.

Die Figur 2a zeigt den inneren Magnetkreis sowie die Spulenanordnung des Dynamogenerators 1 im Querschnitt und perspektivisch und die Figur 2b zeigt in einer gestreckten Anordnung einen Ausschnitt der Spulenwicklung in der Reihenfolge 23.2, 23.1, 23.6, 23.5, die zusammen mit den Polschuhen b, a, f, e die Polfelder N3, S2 und N1 bilden. Die Spulenverbindungen und die mit I und II bezeichneten Wickelrichtungen der Teilspulen 23.2, 23.1, 23.6 und 23.5 sind schematisch angedeutet.

Da eine Spule normal über zwei heteropolare Pole geführt wird, benötigt man drei Spulen für eine 6-polige Anordnung, die nicht näher dargestellt ist. Somit ist die in den Figuren 1a und 1b und in den Figuren 2a und 2b dargestellte eisenlose Spule 23 je Polfeld in zwei gleiche Teilspulen 23.1 bis 23.6 aufgeteilt, die polrichtig in Serie geschaltet sind. Dadurch ist eine geringere Bauhöhe erzielt, d.h. dass bei sechs Polen sechs Teilspulen zu je 60° Teilwinkel vorgesehen sind.

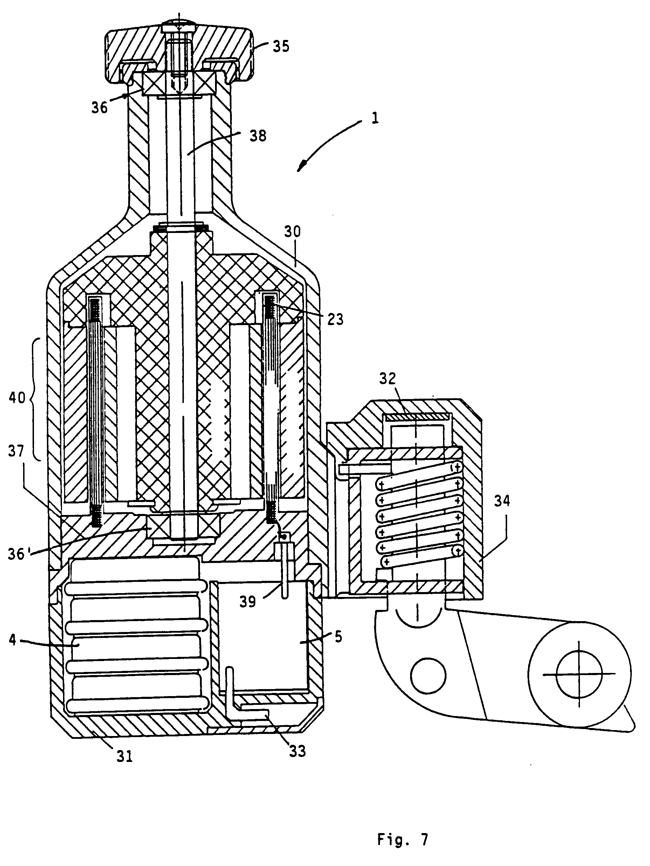

Zur Herstellung der feststehenden, eisenlosen Spule 23 werden die Wicklungen freitragend aus Backlack-Cu-Draht gewickelt und auf den Teilkreis der Spulenanordnung gebogen. Die Spulen werden in ein Kunststoffspritzwerkzeug eingelegt. Die gegenseitigen Spulenanschlüsse sind bereits verbunden und auf einen Anschluss-Stiftstecker 39 (Figur 7) montiert. Das Kunststoffspritzwerkzeug enthält gleichzeitig den Gehäusebodenteil 37 (Figur 7). Das Ganze wird anschliessend mit Kunststoff zu einem Anschlussdrahtlosen, steckbaren Bauteil gespritzt. Diese Konstruktionsart ermöglicht, dass der Elektronikteil direkt an dem Gehäuseboden des Dynamosystems aufgesteckt werden kann. Eine weitere Verdrahtung erübrigt sich somit. Die Drähte der eisenlosen Spule 23 sind bereits verarbeitet und benötigen keine Nacharbeit.

Mit dem oben geschilderten Verfahren wird eine eisenlose Spule 23 ermöglicht, die eine sehr kleine Induktivität, vorzugsweise kleiner als 150 uH, aufweist. Dadurch wird eine vernachlässigbare Gegeninduktivität erzeugt, wodurch die Polfühligkeit kaum oder gar nicht spürbar wird. Der Spulenwiderstand ist vorzugsweise kleiner als 1,6 Ohm, wodurch sich bei einer realisierten Konstruktion des Dynamogenerators 1 eine Luftspaltinduktivität grösser als 0,6 T ergab. Bei der realisierten Konstruktion betrugen der mittlere Spulendurchmesser 31 mm, die Magnetlänge 30 mm und der Aussendurchmesser ca. 44 mm. Angestrebt wird eine verringerte Spulenlänge 40 (Figur 2b und Figur 7) von ca. 20 mm, mit dem sich die erfindungswesentlichen Leistungsmerkmale des Dynamogenerators 1 auch verbessern lassen.

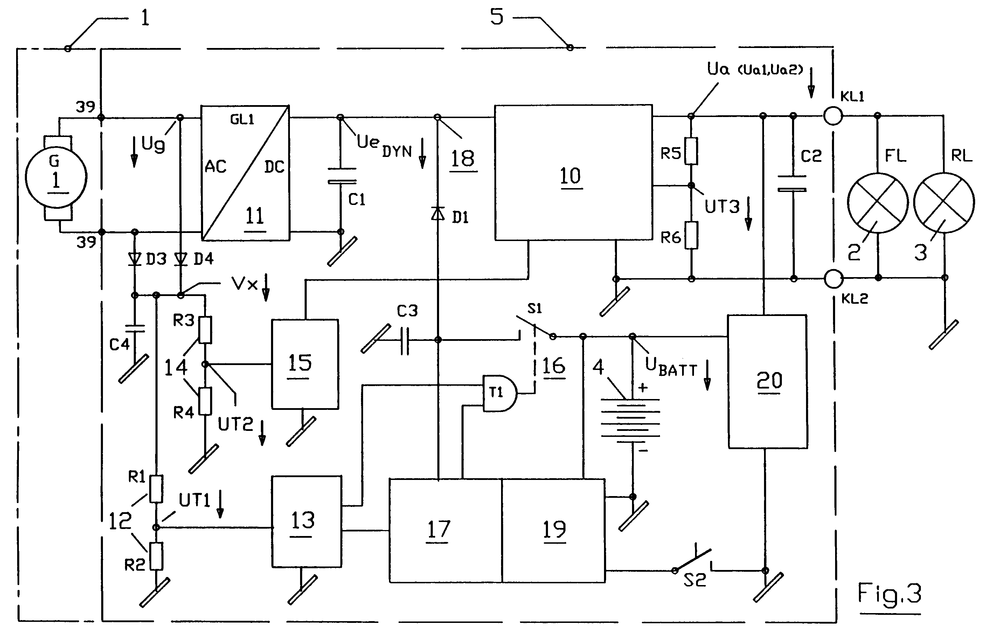

Anhand der Figuren 3 bis 5 werden nachstehend der Aufbau und die Wirkungsweise des gesamten Dynamosystems und insbesondere einer bevorzugten Ausführungsform einer Elektronikanordnung 5 erläutert.

Die Figur 3 zeigt ein Blockschaltbild der Elektronikanordnung 5 des erfindungsgemässen Fahrradbeleuchtungssystems. Die vom Dynamogenerator 1 erzeugte elektrische Wechselspannung wird von einem Gleichrichter 11 gleichgerichtet und von einem Kondensator C₁ geglättet. An einem Schaltungsknoten 18 wird die Summe der gleichgerichteten Dynamospannung U_{eDYN} und der Batteriespannung U_{BATT} gebildet, wie dies nachstehend erläutert wird. Die am Schaltungsknoten 18 erzeugte, kombinierte Spannung U_{eDYN} und U_{BATT} liegt eingangsseitig einer Spannungswandler- und Energiebegrenzervorrichtung 10 an. Letztere setzt diese Spannung/Leistung auf 6 V bzw. 6,4 V um. Die Spannungswandler- und Energiebegrenzervorrichtung 10 hat die Eigenschaft, dass sie sich selbst optimal an den Innenwiderstand des Dynamogenerators 1 anpasst. Sie setzt bei kleiner Eingangsspannung (niedrige Fahrgeschwindigkeit) die anfallende Spannung (Leistung) hoch und bei hoher Fahrgeschwindigkeit und somit hoher Dynamogenerator-Ausgangsspannung und -Leistung die am Schaltungsknoten 18 liegende Spannung Uₐ am Ausgang auf bevorzugt 6,4 V herunter und hält diese mit ca. ± 10 mV Varianz konstant. Durch den Einsatz moderner Bauteile, wie Schottky-Dioden und Leistungs-FET lässt sich ein Wirkungsgrad der Spannungswandler- und Energiebegrenzervorrichtung 10 besser als 85% erzielen. Bei niedrigen Spannungen liegt der Wirkungsgrad etwa bei 85%, und bei hohen Eingangsspannungen am Schaltungsknoten 18, beispielsweise etwa 9V, liegt der Wirkungsgrad der Spannungswandler- und Energiebegrenzervorrichtung 10 über 90%.

Die Gesamtfunktion der Elektronikanordnung 5 wird nachstehend anhand der Erläuterung der Funktion eines ersten Schwellwertschalters 13 und eines zweiten Schwellwertschalters 15 sowie eines Verzögerungskreises 17 und einer Batterieüberwachungsschaltung 19 besser verständlich.

### Erster Schwellwertschalter 13

Die Ausgangsspannung des Dynamogenerators 1 wird über einen aus Dioden D₃ und D₄ bestehenden Gleichrichter gleichgerichtet und durch einen Kondensator C₄ geglättet. Diese Spannung Vₓ ist proportional zur gefahrenen Geschwindigkeit. Sie wird über einen ersten Spannungsteiler 12, der aus zwei Widerständen R₁ und R₂ besteht, geteilt und dem Eingang des ersten Schwellwertschalters 13 zugeführt (Spannung U_{T1}). Letzterer aktiviert eine Torschaltung T₁ bei einer Eingangsspannung grösser als Vₓ = 0,8 V. Das heisst, über die Torschaltung T₁ wird die Spannung einer Batterie 4 über einen elektronischen Schalter S₁/16 und eine Schutzdiode D₁ an den Schaltungs- bzw. Summierknoten 18 gelegt Ein weiterer Ausgang des ersten Schwellwertschalters 13 setzt einen Verzögerungsschalter 17 auf Null (statisch).

Ist die Eingangsspannung am ersten Schwellwertschalter 13 kleiner als Vₓ = 0,8 V, wird der Verzögerungskreis 17 gestartet. Letzterer enthält einen Oszillator und Zählketten. Die Batteriespannung bleibt über die Torschaltung T₁ und den elektronischen Schalter S₁/16 sowie die Schutzdiode D₁ solange am Summierknoten 18 liegen, bis der Ausgang des Verzögerungskreises 17 über die Torschaltung T₁ den elektronischen Schalter S₁/16 öffnet. Dann wird die Batteriespannung abgeschaltet. Somit wird die Torschaltung T₁ mit dem ersten Schwellwertschalter 13 aktiviert und geht mit dem Start des Verzögerungskreises 17 hoch. Ist die Batterie 4 vollständig entladen, defekt oder nicht vorhanden, so wird durch die Batterieüberwachungsschaltung 19 die Aktivierung am Schaltungsknoten 18 verhindert.

### Zweiter Schwellwertschalter 15

Die am Kondensator C₄ anfallende geschwindigkeitsproportionale Spannung des Dynamogenerators 1 wird über einen zweiten Spannungsteiler 14, der aus Widerständen R₃ und R₄ besteht, dem zweiten Schwellwertschalter 15 zugeführt (Spannung U_{T2}). Dieser aktiviert mittels eines Ausgangssignals die Spannungswandler- und Energiebegrenzervorrichtung 10 bei einer Dynamogeneratorausgangsspannung kleiner als Vₓ = 4,5 V, wobei eine Ausgangsspannung der Spannungswandler- und Energiebegrenzervorrichtung 10 von (einstellbar) 4,5 bis 6 V (Uₐ₁) erreicht wird. Ist die Ausgangsspannung des Dynamogenerators 1 höher als 4,8 V, wird über das Ausgangssignal des zweiten Schwellwertschalters 15 die Spannungswandler- und Energiebegrenzervorrichtung 10 so eingestellt, dass sie an ihrem Ausgang 6,4 V (Uₐ₂) erzeugt. Dies bedeutet, dass durch die Funktion der bevorzugten, in der Figur 3 dargestellten Elektronikanordnung 5 bei einer Eingangsspannung U_{T2} bei Vₓ des zweiten Schwellwertschalters 15 kleiner als 4,5 V, Spannung aus der Batterie 4 zur Erzeugung von Standlicht bezogen wird und dass bei einer Eingangsspannung U_{T2} bei Vₓ grösser als 4,8 V, Ausgangsspannung (Fahrspannung) vom Dynamogenerator 1 bezogen wird. Der Uebergang von Batterie- zu Dynamobetrieb erfolgt fliessend.

Ein am Ausgang der Spannungswandler- und Energiebegrenzervorrichtung 10 angeschlossener Ladewandler 20 speist die Batterie 4 sobald die Ausgangsspannung Uₐ 6,1 V überschreitet und proportional zunehmend bis 6,4 V wächst in Abhängigkeit vom Ladezustand der Akkumulatorenbatterie 4. Damit ist sichergestellt, dass im Batteriestandlichtbetrieb keine Ladung erfolgt. Ferner ist sichergestellt, dass bei ungenügender Energie des Dynamogenerators 1, die Spannung nicht unter 6 V abfällt.

Ein am Ausgang der Spannungswandler- und Energiebegrenzervorrichtung 10 angeschlossener Widerstandsspannungsteiler R₅, R₆ gibt ein Steuersignal U_{T3} zur Regelung der Ausgangsspannung Uₐ ab (Feedback). Diese Steuerspannung wird durch den zweiten Schwellwertschalter 15 beeinflusst.

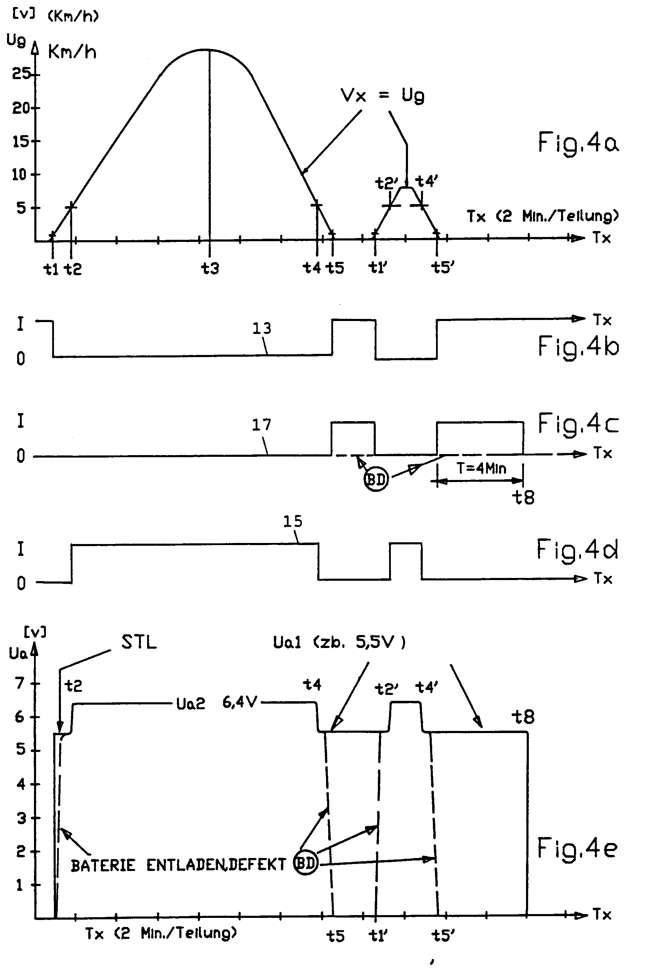

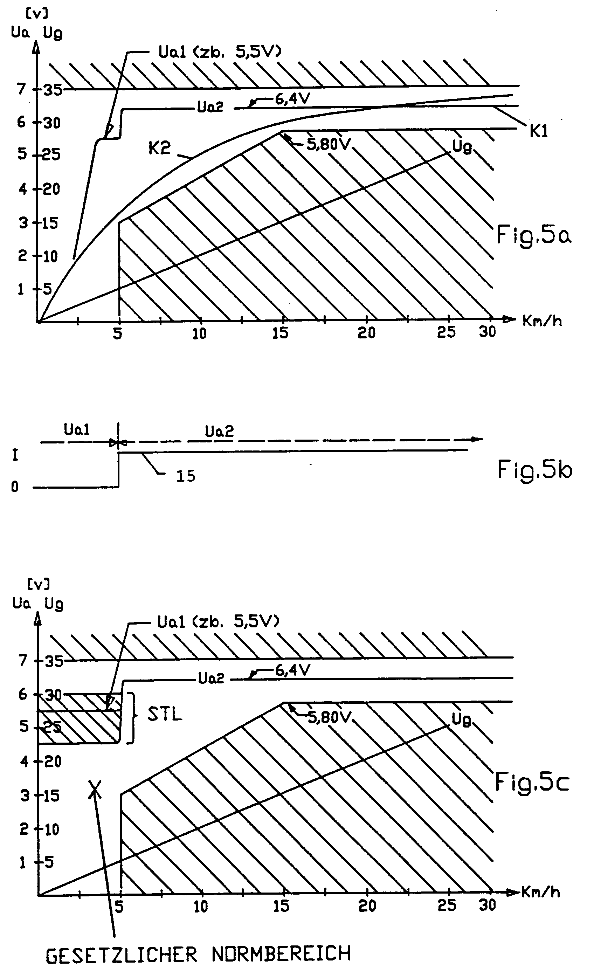

Nachstehend werden die Funktionen der in der Figur 3 schematisch dargestellten Elektronikanordnung 5 anhand der Figuren 4a bis 4e sowie der Figuren 5a bis 5c näher erläutert.

Die Figuren 4a bis 4e zeigen in schematischer Form graphisch die zeitliche Abhängigkeit der Spannungen U_{g} (im wesentlich Vₓ), U_{T1} und U_{T2} (eine Teilspannung von Vₓ), die jeweils vom ersten Spannungsteiler 12 und vom zweiten Spannungsteiler 14 erzeugt werden und die jeweils dem ersten Schwellwertschalter 13 und dem zweiten Schwellwertschalter 15 zugeführt werden, wobei die etwa linearen geschwindigkeitsproportionalen Abhängigkeiten dieser Spannungen so angenommen sind, dass sie von Null beginnend bei einem Zeitpunkt t₁(t_{1'}) bis zu einem Zeitpunkt t₃(t_{3'}) anwachsen entsprechend einer angenommenen Geschwindigkeitszunahme von 0 bis 30 km/h, und dann von t₃(t_{3'}) bis t₅(t_{5'}) annähernd linear wieder abfallen. Zum Zeitpunkt t₁(t_{1'}), wo die Spannung U_{T1} bei Vₓ=0,8 V erreicht wird, wird der erste Schwellwertschalter 13 aktiviert, und zum Zeitpunkt t₅(t_{5'}), wo diese Spannung bei Vₓ von 0,8 V wieder unterschritten wird, entaktiviert (Start- und Fahrbetrieb). Zwischen den Zeitpunkten t₁(t_{1'}) und t₅(t_{5'}) bleibt der Verzögerungskreis 17 zurückgesetzt. Zum Zeitpunkt t₅(t_{5'}) beginnt der Verzögerungskreis die Verzögerung von beispielsweise vier Minuten abzumessen, die zum Zeitpunkt t₈ (Figur 4c) beendet ist, und über die Torschaltung T₁ den elektronischen Schalter 16 öffnet und damit die Batteriespannung ausschaltet. Steigt die Dynamospannung vor Ablauf der Verzögerungszeit t₅-t_{1'} (Figur 4a), wird der Verzögerungskreis durch den ersten Schwellwertschalter 13 zurückgesetzt und die Funktionen beginnen erneut wie zum Zeitpunkt t₁(t_{1'}).

Der zweite Schwellwertschalter 15 (Figur 3) wird zum Zeitpunkt t₂ über den zweiten Spannungsteiler 14 (Figur 3) durch U_{T2} aktiviert, wenn die Spannung Vₓ 4,8 V überschreitet (Figur 4d). Wenn die Spannung Vₓ zum Zeitpunkt t₄ (Figur 4d) wieder 4,5 V unterschreitet, wird der zweite Schwellwertschalter 15 über den zweiten Spannungsteiler 14 durch U_{T2} entaktiviert. Während seiner Aktivierungsdauer wandelt die Spannungswandler- und Energiebegrenzervorrichtung 10 die Ausgangsspannung Uₐ₂ auf bevorzugte 6,4 V. Dies geschieht sobald die Fahrgeschwindigkeit etwa 5 bis 7 km/h überschreitet (Figuren 4a und 4e). Im inaktiven Bereich des zweiten Schwellwertschalters 15 (Fahrgeschwindigkeit unter 3 km/h) wandelt die Spannungswandler- und Energiebegrenzervorrichtung 10 die Ausgangsspannung Uₐ₁ auf 4,5 bis 6 V, vorzugsweise fest eingestellt auf beispielsweise 5,5 V (Figur 4e).

Die in den Figuren 4a bis 4e dargestellten Funktion/Zeit-Diagramme werden im Spannung/Geschwindigkeit-Diagramm der Figuren 5a bis 5c zusammengefasst gezeigt. Die Umschaltung von Uₐ = 4,5 V auf Uₐ = 6,4 V geschieht bei einer Fahrgeschwindigkeit von etwa 5 bis 7 km/h.

Die in den Figuren 4a bis 4e dargestellten Funktion/Zeit-Diagramme geben abhängig vom Spannungs/Geschwindigkeits-Zeitverlauf (Figur 4a) jeweils die Funktionen des ersten Schwellwertschalters 13 (Figur 4b), des zweiten Schwellwertschalters 15 (Figur 4d), des Verzögerungskreises 17 (Figur 4c) und der Ausgangsspannung Uₐ (Figur 4e, Uₐ₁, Uₐ₂) wieder.

Der Verzögerungskreis 17 wird aktiviert wenn die Schwellenspannung 'Vₓ ca. 0,8 V' unterschreitet (d.h. das Fahrrad hält an). Der Verzögerungskreis 17 schaltet nun über das Tor T₁ und den elektronischen Schalter 16 während einer Zeitdauer von beispielsweise vier Minuten die Spannung der Batterie 4 an den Knotenpunkt 18 zur Spannungswandler- und Energiebegrenzervorrichtung 10. Letztere erzeugt nun die Ausgangsspannung (Standlicht). Nach Ablauf des Zeitintervalls wird der Kontakt S1 des elektronischen Schalters 16 geöffnet und somit das ganze System abgeschaltet. Ueberschreitet der erste Schwellwertschalter 13 das Steuersignal Yₓ, wenn während des Verzögerungsintervalls die Spannung Vₓ gleich 0,8 V ist, wird der Verzögerungskreis 17 auf Null zurückgestellt, und es beginnt das normale Fahrtprogramm, wie vorstehend unter "Erster Schwellwertschalter" beschrieben wurde.

Zusammengefasst bedeutet dies, dass bei Anhalten des Fahrrads das Standlicht mindestens vier Minuten brennt und bei erneutem Anfahren ohne Unterbrechung auf das Fahrtprogramm umgeschaltet wird.

Eine Batterieladezustandsüberwachungsschaltung 19 (Figur 3) überwacht die Batterie 4 auf ihren Ladezustand und ihre Funktionstüchtigkeit. Ist die Batterie 4 entladen oder nicht funktionstüchtig, so verhindert die Batterieladezustandsüberwachungsschaltung 19 das Anschalten der Batterie an den Knotenpunkt 18, und damit wird das System gemäss der Figur 5a direkt über den Dynamogenerator U_{g} (ohne Standlicht) und die Spannungswandler- und Energiebegrenzervorrichtung 10 betrieben. Damit ist sichergestellt, dass die Batterie gegen Tiefentladung geschützt ist.

Die Figuren 5a, 5b und 5c zeigen den durch das erfindungsgemässe Fahrradbeleuchtungssystem erreichten Verlauf der Ausgangsspannung Uₐ in Form einer Kurve K₁ zwischen den schraffierten gesetzlich genormten Bereichen. Der Verlauf der Ausgangsspannung ist mit Uₐ₁ und Uₐ₂ in Figur 5b dargestellt. Eine Kurve K₂ in Figur 5a zeigt dagegen den Verlauf der Ausgangsspannung eines herkömmlichen Fahrradbeleuchtungssystems. Der Standlichtbereich ist in der Figur 5c mit STL bezeichnet und reicht über einen Geschwindigkeitsbereich von 0 bis ca. 5 km/h.

Das oben erläuterte Fahrradbeleuchtungssystem und das Dynamosystem mit dem erfindungsgemässen dynamogenerator 1 haben somit insbesondere folgende Vorteile:
- Der Dynamogenerator 1 verfügt über einen sehr hohen Wirkungsgrad, der eine Leistung von mehr als 4,5 W bei einer Mindestfahrgeschwindigkeit von etwa 5 bis 7 km/h erzeugt;
- diese Dynamoleistung wird durch die auf- und abwärts wandelnde Elektronikanordnung 5 oberhalb etwa 5 km/h auf 6,4 V umgesetzt und konstantgehalten;
- diese Energie steht nun einerseits für die Ladung der Akkumulatorenbatterie 4 sowie für die Lichterzeugung direkt zur Verfügung;
- die Elektronikanordnung 5 arbeitet bereits ab 2 V mit einer Eingangsspannung ab 1,5 V und bis etwa 80 V, wobei diese 80 V ca. 80 km/h entsprechen;
- das Verhältnis der Energieaufteilung in Fahrtlicht und Standlicht wird im Verhältnis von 1-2:1 erzielt, d.h. bis zwei Einheiten für Fahrtlicht und eine Einheit für Standlicht, unabhängig von der Fahrgeschwindigkeit. Dieses Aufteilungsverhältnis ist zurzeit immer noch durch die Ladefähigkeit der Akkumulatorenbatterien begrenzt. Bei einer erhöhten Ladefähigkeit könnte das Aufteilungsverhältnis ausgeweitet werden und beispielsweise 0,5:1 erreichen. Solche Batterien sind noch nicht verfügbar oder sie weisen andere Nachteile auf;
- das Fahrradbeleuchtungssystem gemäss der vorliegenden Erfindung erfüllt die gesetzliche Dynamo-Leistungskurve bei weitem, da dauernd konstante und genügend Energie für Lichterzeugung und Batterieladung zur Verfügung steht;
- bei der vorgenommenen Teilung der Ausgangsspannung der Spannungswandler- und Energiebegrenzervorrichtung 10 der Elektronikanordnung 5 zu einer Ausgangsspannung von 4,5 V bis 6 V unterhalb einer Geschwindigkeit von ca. 5 km/h und einer "Fahrtspannung" von 6,4 V wird die Norm für Stillstand und jede Fahrgeschwindigkeit, die 3 W erfordert, ideal erfüllt;
- die Batteriebilanz ist sicher gewährleistet;
- durch den besseren Wirkungsgrad des gesamten Fahrradbeleuchtungssystems ergibt sich ein weit kleinerer Fahrwiderstand, d.h. die zum Bewegen des Dynamosystems erforderliche Tretleistung des Radfahrers ist trotz erhöhter Dynamoleistung erheblich verringert;
- die Verwendung der eisenlosen Spule 23 im Dynamogenerator 1 eliminiert die magnetische Rasterung;
- der Dynamogenerator hat sehr geringe induktive Verluste, benötigt keine Schleifkontakte und ist dadurch besser und zuverlässiger; und
- schliesslich eliminiert die Rotation des gesamten magnetischen Kreises (Innenkreis 21 und Aussenkreis 22) die Magnetverluste des Dynamogenerators 1.

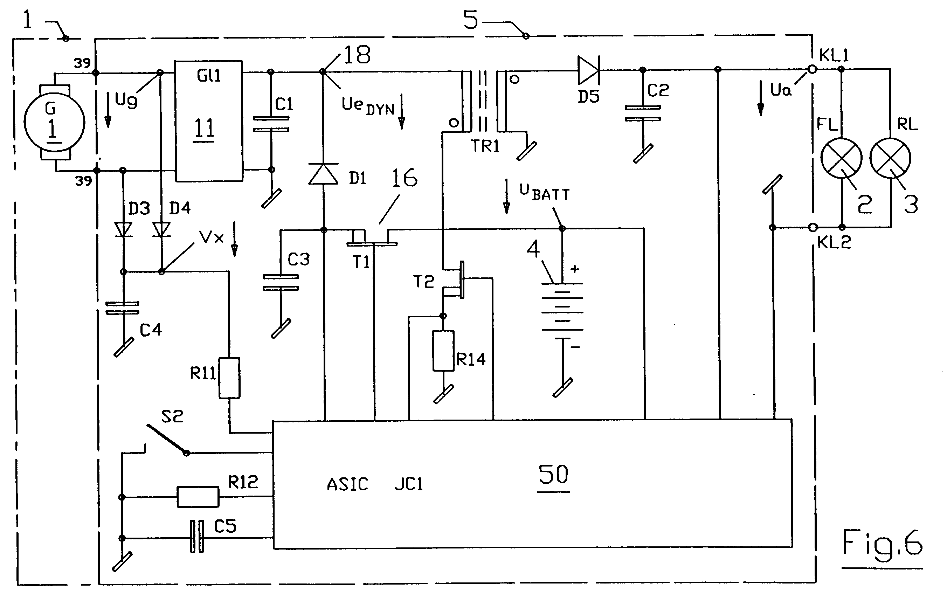

Die Figur 6 zeigt eine beispielhafte bevorzugte Realisierung der Elektronikanordnung 5 eines kundenspezifischen, integrierten, monolithischen Schaltkreises 50, an dessen Pins äussere Schaltelemente der Elektronikanordnung angeschlossen sind.

Da alle elektronischen Funktionen aufwendig und komplex sind und der Aufbau mit integrierten Standard-Schaltkreisen viele Bauteile und viel Platz beanspruchen würde, werden sämtliche Funktionen (Digital- und Analogfunktionen) sinnvollerweise in einem Ein-Chip-ASIC realisiert. Da ein Fahrradbeleuchtungssystem ein Massenartikel ist, lohnt sich die Massenherstellung des kundenspezifischen, integrierten, monolithischen Schaltkreises 50 auch wirtschaftlich. Bauelemente, die sich nicht oder nicht sinnvoll integrieren lassen, wie der Gleichrichter 11, ein Transformator T, die Kondensatoren C₁, C₂, C₃ und C₄, ein Leistungsausgangstransistor und weitere Bauelemente, sind an den Pins des kundenspezifischen, integrierten, monolithischen Schaltkreises 50 in der in der Figur 6 dargestellten Schaltungsanordnung angeschlossen.

Mit dem Vorsehen des kundenspezifischen, integrierten, monolithischen Schaltkreises 50 für die elektronischen Funktionen der Elektronikanordnung 5, lässt sich diese sehr kompakt und klein realisieren, so dass sie sich zusammen mit der Akkumulatorenbatterie 4 in einem kleinen Gehäuse unterbringen lässt, das entweder mit dem Dynamogehäuse integriert oder separat daran befestigbar ist.

Die Figur 7 zeigt einen Längsschnitt durch eine Ausführungsform des erfindungsgemässen Dynamogenerators 1 als Seitendynamo mit integrierter Akkumulatorenbatterie 4 und integrierter Elektronikanordnung 5. Das Seitendynamo ist in üblicher Weise an einem Schwenker 34 befestigt und weist ein die rotierenden Innenkreis 21 und Aussenkreis 22 und die feststehenden Teilspulen 23.1-23.6 des Dynamogenerators 1 umschliessendes oberes Gehäuseteil 30, und ein die Akkumulatorenbatterie 4 und die Elektronikanordnung 5 umschliessendes unteres Gehäuseteil 31 auf, das mit dem oberen Gehäuseteil 30 fest verbunden ist. Die Spulenwicklungen 23.1 bis 23.6 sind mit dem Gehäuseboden 37 einstückig verbunden. Die Elektronikanordnung 5 ist mittels der Steckstifte 39 mit den Teilspulen 23.1-23.6 verbunden. Anschlüsse 33 zu Fahrradlampen 2 und 3 (Figur 3) befinden sich im unteren Teil des unteren Gehäuseteil 31. Am Dynamosystem ist ein Sensor 32 (S2 in Figur 3) vorgesehen, welcher feststellt, dass das Seitendynamo in der Ruhestellung des Schwenkers 34 nicht betriebsbereit ist und dementsprechend der Elektronikanordnung 5 ein Signal liefert, welches das bestehende Standlicht unmittelbar unterbricht. Dieser zur Abschaltung des gesamten Fahrradbeleuchtungssystems dienende Sensor 32 ist im Gehäuse des Schwenkers 34 untergebracht. Ein Antriebsrad 35 ist fest mit der Dynamoachse 38 verbunden, die ihrerseits mit dem Trägerkern 41 des Innenkreises 21 verbunden ist. Die Dynamoachse 38 ist jeweils in einem oberen Drehlager 36 und in einem unteren Drehlager 36' leicht drehbar gelagert.

Obwohl das in der Figur 7 im Längsschnitt dargestellte Dynamosystem als Seitendynamo realisiert ist, ist es für den Fachmann einleuchtend, dass die oben beschriebenen besonderen Merkmale des erfindungsgemässen Generators 1 auch für einen Walzendynamo oder für einen Nabendynamo einsetzbar sind.

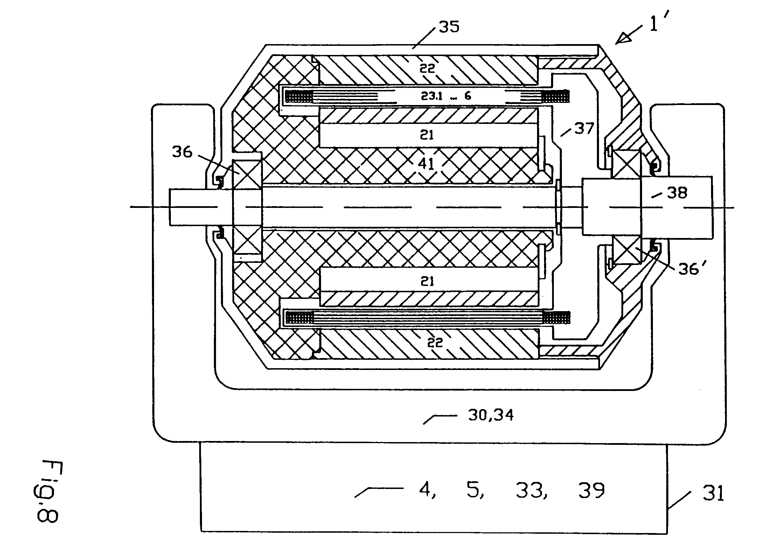

Die Figur 8 zeigt einen Längsschnitt durch eine Ausführungsform des erfindungsgemässen Dynamogenerators 1 als Walzendynamo mit integrierter Batterie 4 und mit integrierter Elektronikanordnung 5. Das Dynamosystem ist auf einem U-förmigen Schwenkarm 34 befestigt, der vor dem Hinterrad des Fahrrades derart angeordnet ist, dass die Rotationsachse der Dynamowelle 38 im wesentlichen senkrecht zur Ebene des Fahrradrahmens oder, mit anderen Worten, parallel zur Achse des Hinterrades ist.

Der Schwenkarm 34 verkörpert teilweise das obere Gehäuseteil 30, das die rotierenden Kreise 21, 22 sowie die feststehende Spule 23 des Dynamogenerators 1' umschliesst. Das untere Gehäuseteil 31 ist mit dem oberen Gehäuseteil 30 fest verbunden und umschliesst die Batterie 4 sowie die Elektronikanordnung 5. Die stationären Spulenwicklungen 23.1-23.6 sind mit dem Gehäuseboden 37 einstückig verbunden.

Das als Walze ausgebildete Antriebsrad 35, welches frontal auf den Reifen des Hinterrades angesetzt wird, ist auf der koaxial drehbaren Dynamowelle 38 fest befestigt, die ihrerseits in den Drehlagern 36 und 36' leicht drehbar gelagert sind. Auf diese Weise umschliesst das Antriebsrad 35 den Aussenkreis 22 und den Innenkreis 21. Die Dynamowelle 38 ist fest verbunden mit dem NE-Trägerkern 41 des inneren Magnetkreises 21.

Selbstverständlich können bei einer alternativen Ausführungsart die in der Figur 6 gezeigte Elektronikanordnung 5, die dazugehörigen äusseren Bauteile und die Akkumulatorenbatterie 4 auch abgesetzt vom Dynamogenerator 1 separat am Fahrrad angeordnet werden.

## Patentansprüche

1. Fahrradbeleuchtungssystem mit einem von einem fahrenden Fahrrad antreibbaren und an diesem angebrachten Dynamosystem, wenigstens einem Vorderlicht und wenigstens einem Rücklicht, die jeweils vom Dynamosystem mit elektrischer Leistung gespeist werden, und mit einer Elektronikanordnung, die vom Dynamosystem erzeugte elektrische Leistung zur Lichterzeugung und zum Laden einer aufladbaren Akkumulatorenbatterie in eine geregelte Gleichspannung umsetzt, dadurch gekennzeichnet, dass das Dynamosystem einen Dynamogenerator (1) aufweist, der so angeordnet und aufgebaut ist, dass er ab einer Mindestfahrgeschwindigkeit von etwa 5 bis 7 km/h eine zum Laden der Akkumulatorenbatterie (4) und gleichzeitig zur Speisung des Vorderlichts (2) und des Rücklichts (3) ausreichende elektrische Leistung erzeugt, dass die Elektronikanordnung (5) einen Wandler (10) aufweist, der eine auf- und abwärts wandelnde Funktion hat, und dass die Elektronikanordnung (5) zusätzlich von der Akkumulatorenbatterie (4) gespeist wird, solange die Mindestfahrgeschwindigkeit unterschritten wird.

2. Fahrradbeleuchtungssystem nach Anspruch 1, dadurch gekennzeichnet, dass die Elektronikanordnung (5) eine Spannungswandler- und Energiebegrenzervorrichtung (10) als Wandler und eine eine gleichgerichtete Dynamogeneratorausgangsspannung (U_{eDYN}) erfassende Schwellwertvorrichtung (12-17) aufweist, wobei, wenn die Schwellwertvorrichtung ein Ueberschreiten einer bestimmten Mindestspannung des Dynamogenerators (1) erfasst, die von der Akkumulatorenbatterie (4) gelieferte Spannung (U_{BATT}) über eine elektronische Schaltvorrichtung (16) zusätzlich zur gleichgerichteten Ausgangsspannung (U_{eDYN}) des Dynamogenerators (1) der Spannungswandler- und Energiebegrenzervorrichtung (10) zugeführt wird; dass die Ausgangsspannung (Uₐ) der Spannungswandler- und Energiebegrenzervorrichtung (10) bei Batteriebetrieb in einem ersten konstanten Ausgangsspannungsbereich (Uₐ₁) und bei Dynamobetrieb in einem zweiten konstanten Ausgangsspannungsbereich (Uₐ₂) liegt, der über dem ersten konstanten Ausgangsspannungsbereich (Uₐ₁) liegt; und dass eine Batterieladevorrichtung (20) oberhalb einer zwischen dem ersten Ausgangsspannungsbereich (Uₐ₁) und dem zweiten Ausgangsspannungsbereich (Uₐ₂) liegenden Ausgangsladespannung (U₀) aktiviert wird.

3. Fahrradbeleuchtungssystem nach Anspruch 2, dadurch gekennzeichnet, dass der erste konstante Ausgangsspannungsbereich (Uₐ₁) der Elektronikanordnung (5) in einem Bereich von 4 bis 6 V, vorzugsweise 4,5 bis 6 V, liegt und die Ausgangsladespannung (U₀) vorzugsweise 6,1 V beträgt.

4. Fahrradbeleuchtungssystem nach Anspruch 2, dadurch gekennzeichnet, dass die Spannungswandler- und Energiebegrenzervorrichtung (10) die Ausgangsleistung der Elektronikanordnung (5) konstant auf 4 bis 6 W, vorzugsweise auf 4,5 bis 5 W, begrenzt.

5. Fahrradbeleuchtungssystem nach Anspruch 2, dadurch gekennzeichnet, dass die Elektronikanordnung (5) weiterhin aufweist:
- eine Gleichrichterschaltung (11) zur Erzeugung der gleichgerichteten und geglätteten Dynamogeneratorausgangsspannung (U_{eDYN}), die der Spannungswandler- und Energiebegrenzervorrichtung (10) zugeführt wird;
- ein erstes Spannungsteilernetzwerk (12, R₁, R₂), das eine erste gleichgerichtete und zur Fahrgeschwindigkeit proportionale Ausgangsspannung des Dynamogenerators (1) in eine erste Teilspannung (U_{T1}) umsetzt und diese Teilspannung einem ersten Schwellwertschalter (13) zuführt;
- ein zweites Spannungsteilernetzwerk (14, R₃, R₄), das die gleichgerichtete, zur Fahrgeschwindigkeit proportionale Ausgangsspannung (U_{eDYN}) des Dynamogenerators (1) in eine zweite Teilspannung (U_{T2}) umsetzt und diese Teilspannung einem zweiten Schwellwertschalter (15) zuführt, wobei
der erste Schwellwertschalter (13) die Batteriespannung (U_{BATT}) der Spannungswandler- und Energiebegrenzervorrichtung (10) über die elektronische Schaltvorrichtung (16) anlegt, wenn die gleichgerichtete, vom Dynamogenerator (1) abgegebene Spannung (U_{eDYN}) eine erste, vom ersten Schwellwertschalter (13) erfasste Schwellenspannung überschritten hat, und
der zweite Schwellwertschalter (15) der Spannungswandler- und Energiebegrenzervorrichtung (10) ein Signal zum Umschalten ihrer Ausgangsspannung von der ersten konstanten Ausgangsspannung (Uₐ₁) zur zweiten konstanten Ausgangsspannung (Uₐ₂) und umgekehrt, jeweils bei einem vom zweiten Schwellwertschalter (15) erfassten Unter- bzw. Ueberschreiten einer zweiten Schwellenspannung, zuführt;
- einen mit dem Ausgang des ersten Schwellwertschalters (13) und mit der elektronischen Schaltvorrichtung (16) verbundenen Verzögerungskreis (17), der - wenn die gleichgerichtete, vom Dynamogenerator (1) abgegebene Spannung (U_{eDYN}) die erste Schwellenspannung unterschreitet - nach Ablauf einer vorgegebenen Zeitdauer die elektronische Schaltvorrichtung (16) öffnet, um die von der Batterie (4) gelieferte Spannung (U_{BATT}) vom Eingang der Spannungswandler- und Energiebegrenzervorrichtung (10) abzuschalten; und
- einen Batterieladewandler (20), der ausgangsseitig mit der Spannungswandler- und Energiebegrenzervorrichtung (10) gekoppelt ist und der auch bei Batteriebetrieb zum Laden der Batterie (4) aktiviert bleibt.

6. Fahrradbeleuchtungssystem nach Anspruch 5, dadurch gekennzeichnet, dass am Dynamosystem ein Sensor (32) vorgesehen ist, welcher feststellt, dass das Dynamosystem bei herausgeklapptem Dynamo in der Ruhestellung nicht betriebsbereit ist und dementsprechend der Elektronikanordnung (5) ein Signal liefert, welches das bestehende Standlicht unmittelbar unterbricht.

7. Fahrradbeleuchtungssystem nach Anspruch 1, dadurch gekennzeichnet, dass der Dynamogenerator (1) einen Innenkreis (21) und einen Aussenkreis (22) aufweist, die beide synchron und gleichsinnig rotierend um eine festliegende eisenlose Spule (23) bestehend aus Teilspulen (23.1-23.6) gelagert sind, und dass der Innenkreis 21 und der Aussenkreis 22 jeweils n Pole (a-f und g-m) in identischer Polteilung aufweisen.

8. Fahrradbeleuchtungssystem nach Anspruch 7, dadurch gekennzeichnet, dass der Innenkreis (21) n innere Polschuhe (a-f) aufweist, und dass zwischen diesen inneren Polschuhen (a-f) n Permanentmagnete (24-29) so angeordnet sind, dass sie jeweils gleichpolig an beiden Seiten jedes inneren Polschuhs anliegen.

9. Fahrradbeleuchtungssystem nach Anspruch 7 oder 8, dadurch gekennzeichnet, dass der Aussenkreis (22) n den inneren Polschuhen (a-f) gegenüberliegend und zu diesen nasenförmig vorspringende äussere Polschuhe (g-m) aufweist, die so geformt sind, dass jeder Luftspalt zwischen einander zugeordneten inneren und äusseren Polschuhen für den Magnetfluss der kürzeste Weg ist.

10. Fahrradbeleuchtungssystem nach Anspruch 8, dadurch gekennzeichnet, dass jeder innere Polschuh (a-f) in der Mitte einen einen Luftspalt bildenden Schlitz (31-36) in radialer Richtung aufweist, um die gegenseitige Beeinflussung der beiden seitlich am inneren Polschuh (a-f) anliegenden Magnete (24-29) zu reduzieren.

11. Fahrradbeleuchtungssystem nach Anspruch 8 oder 10, dadurch gekennzeichnet, dass die Summe (a₁+a₂) der an jedem inneren Polschuh (a-f) anliegenden Flächen (a₁ und a₂) der beiden seitlichen Magnete (24-29) grösser als die periphere Fläche (b₁) jedes inneren Polschuhs ist.

12. Fahrradbeleuchtungssystem nach Anspruch 7, dadurch gekennzeichnet, dass die eisenlose Spule 23 je Polfeld in zwei gleiche, polrichtig in Reihe geschaltete Teilspulen (23.1 bis 23.6) aufgeteilt ist, dass die Induktivität der eisenlosen Spule kleiner als 150 uH ist, und dass der Spulenwiderstand und der Innenwiderstand des Dynamogenerators (1) kleiner als 1,5 Ohm sind.

13. Fahrradbeleuchtungssystem nach einem der Ansprüche 2 bis 5, dadurch gekennzeichnet, dass die Elektronikanordnung (5) einen kundenspezifischen, integrierten, monolithischen Schaltkreis (50) aufweist.

14. Fahrradbeleuchtungssystem nach einem der Ansprüche 2 bis 5, dadurch gekennzeichnet, dass die abgegebene Leistung bei einer Fahrgeschwindigkeit von 3,5 bis 5 km/h und einer Last von 3 Ohm mindestens 3 W und bei einer Fahrgeschwindigkeit von 7 km/h mehr als 4,5 W beträgt.

15. Fahrradbeleuchtungssystem nach einem der Ansprüche 7 bis 12, dadurch gekennzeichnet, dass die abgegebene Ausgangsspannung des Dynamogenerators (1) um etwa 0,8 bis 1,2 V je Geschwindigkeitsänderung von 1 km/h variiert.

16. Fahrradbeleuchtungssystem nach Anspruch 1 oder 7, dadurch gekennzeichnet, dass der Dynamogenerator (1) als Seitendynamo realisiert ist.

17. Fahrradbeleuchtungssystem nach Anspruch 1 oder 7, dadurch gekennzeichnet, dass der Dynamogenerator (1) als Walzendynamo realisiert ist.

18. Fahrradbeleuchtungssystem nach einem der Ansprüche 1 bis 5, dadurch gekennzeichnet, dass die Elektronikanordnung (5) gemeinsam mit der Batterie 4 in einem vom Dynamogenerator (1) separaten Gehäuse angeordnet ist.

19. Fahrradbeleuchtungssystem nach Anspruch 18, dadurch gekennzeichnet, dass das separate Gehäuse (31) der Elektronikanordnung (5) am Gehäuse (30, 37) des Dynamogenerators (1) befestigt ist.

20. Fahrradbeleuchtungssystem nach einem der Ansprüche 1 bis 5, dadurch gekennzeichnet, dass die Elektronikanordnung (5), die Batterie (4) und der Dynamogenerator (1) zusammen in einem zweiteiligen Gehäuse angeordnet sind.

21. Generator mit einem Innenkreis und einem Aussenkreis, die beide synchron und gleichsinnig rotierend um einen festliegenden Stator gelagert sind und jeweils n Pole in identischer Polteilung aufweisen, dadurch gekennzeichnet, dass der Stator eine zwischen dem Innenkreis und den Aussenkreis angeordnete ortsfeste eisenlose Spule ist, dass der Innenkreis n innere Polschuhe aufweist und Magnete derart angeordnet sind, dass sie jeweils gleichpolig an beiden Seiten jedes inneren Polschuhs anliegen, und dass der Aussenkreis n den inneren Polschuhen gegenüberliegend und zu diesen nasenförmig vorspringende äussere Polschuhe aufweist, so dass ein zwischen einander zugeordneten inneren und äusseren Polschuhen jeweils gebildeter Luftspalt der kürzeste Weg für den Magnetfluss ist.

22. Generator nach Anspruch 21, dadurch gekennzeichnet, dass jeder innere Polschuh in der Mitte einen einen Luftspalt bildenden Schlitz in radialer Richtung aufweist, um die gegenseitige Beeinflussung der beiden seitlich am inneren Polschuh anliegenden Magnete zu reduzieren.

23. Generator nach Anspruch 21, dadurch gekennzeichnet, dass die Summe der an jedem inneren Polschuh anliegenden Flächen der beiden seitlichen Magnete grösser als die periphere Fläche jedes inneren Polschuhs ist.

24. Generator nach Anspruch 21, dadurch gekennzeichnet, dass die eisenlose Spule je Polfeld in zwei gleiche polrichtig in Reihe geschaltete Teilspulen aufgeteilt ist.

25. Generator nach Anspruch 21, dadurch gekennzeichnet, dass die Polzahl n wenigstens vier, vorzugsweise aber gleich sechs ist.

## Claims

1. A bicycle lighting system comprising a dynamo system drivable by a ridden bicycle and mounted thereon, at least one front light and at least one rear light, both of which are at times supplied with electric power from said dynamo system, and an electronic circuitry which converts the electric power generated by said dynamo system into a regulated direct-current voltage for generating light and for charging a rechargeable accumulator battery, characterized in that said dynamo system comprises a dynamo generator (1) which is arranged and constructed such that, starting from a minimum travel speed of approximately 5 to 7 kmph, it generates adequate electric power for charging the accumulator battery (4) and simultaneously for energizing the at least one front light (2) and the at least one rear light (3), that said electronic circuitry (5) comprises a converter (10) which has a set-up and set-down converting mode of operation, and that said electronic circuitry (5) is additionally fed by the accumulator battery (4) as long as the travel speed remains under said minimum travel speed.

2. The bicycle lighting system according to claim 1, characterized in that said electronic circuitry (5) comprises, as the converter, a voltage-converting and energy-limiting device (10), and a threshold-value device (12-17) which detects a rectified dynamo-generator output voltage (U_{eDYN}), whereby - in case the threshold-value device detects that a specified minimum voltage of the dynamo generator (1) is exceeded - a voltage (U_{BATT}) supplied from the accumulator battery (4) is fed, in addition to the rectified output voltage (U_{eDYN}) of the dynamo generator (1), by means of an electronic switchgear (16) to the voltage-converting and energy-limiting device (10); that the output voltage (Uₐ) of the voltage-converting and energy-limiting device (10) is, during battery operation, within a first constant output-voltage range (Uₐ₁) and, during dynamo operation, within a second constant output-voltage range (Uₐ₂), the latter lying above the first constant output-voltage range (Uₐ₁); and that a battery charging device (20) is activated above an output charging voltage (U₀) lying between the first constant output-voltage range (Uₐ₁) and the second constant output-voltage range (Uₐ₂).

3. The bicycle lighting system according to claim 2, characterized in that the first constant output-voltage range (Uₐ₁) of said electronic circuitry (5) lies in a range from 4 to 6 V, preferably from 4.5 to 6 V, and the output charging voltage (U₀) is preferably 6.1 V.

4. The bicycle lighting system according to claim 2, characterized in that the voltage-converting and energy-limiting device (10) limits the electric power output of said electronic circuitry (5) invariably between 4 and 6 W, preferably invariably between 4.5 and 5 W.

5. The bicycle lighting system according to claim 2, characterized in that said electronic circuitry (5) further comprises:
- a rectifier circuit (11) for producing a rectified and smoothed dynamo-generator output voltage (U_{eDYN}) which is supplied to the voltage-converting and energy-limiting device (10);
- a first voltage-divider network (12, R₁, R₂) which converts a first rectified and travel-speed proportional output voltage of the dynamo generator (1) into a first component voltage (U_{T1}) and supplies this component voltage to a first threshold-value switch (13);
- a second voltage-divider network (14, R₃, R₄) which converts the rectified and travel-speed proportional output voltage (U_{eDYN}) of the dynamo generator (1) into a second component voltage (U_{T2}) and supplies this component voltage to a second threshold-value switch (15), whereby
the first threshold-value switch (13) applies the battery voltage (U_{BATT}) to the voltage-converting and energy-limiting device (10) by means of the electronic switchgear (16) when the rectified voltage (U_{eDYN}) delivered by the dynamo generator (1) has exceeded a first threshold voltage detected by the first threshold-value switch (13); and
the second threshold-value switch (15) delivers to the voltage-converting and energy-limiting device (10) a signal for switching over the output voltage of the latter from the first constant output-voltage range (Uₐ₁) to the second constant output-voltage range (Uₐ₂) and vice versa, whenever the second threshold-value switch (15) detects that a second threshold voltage is not reached or is exceeded, respectively;
- a delay circuit (17) which is connected with the output of the first threshold-value switch (13) and with the electronic switchgear (16), and which - in case the rectified output voltage (U_{eDYN}) outgoing from the dynamo generator (1) falls short of the first threshold voltage - opens the electronic switchgear (16) at the end of a predetermined period of time, in order to switch off the voltage (U_{BATT}) supplied by the accumulator battery (4) from the input of the voltage-converting and energy-limiting device (10); and
- a battery charging converter (20) which is coupled with the output side of the voltage-converting and energy-limiting device (10) and which - also during battery operation - remains activated for charging the battery (4).

6. The bicycle lighting system according to claim 5, characterized in that there is provided at said dynamo system a sensor (32) which detects that said dynamo system with the dynamo tilted away in the inoperative position thereof is not ready for operation and accordingly supplies a signal to said electronic circuitry (5), such signal immediately cutting off any existing standstill light.

7. The bicycle lighting system according to claim 1, characterized in that the dynamo generator (1) comprises an inner circuit (21) and an outer circuit (22), both of which are mounted for synchronous rotation in a same direction about a stationary air-core coil (23) comprising coil sections (23.1-23.6), and that said inner circuit (21) and said outer circuit (22) each comprise n poles (a-f and g-m) in identical pole pitch.

8. The bicycle lighting system according to claim 7, characterized in that said inner circuit (21) comprises n inner pole shoes (a-f) and that between these n inner pole shoes (a-f) there are arranged n permanent magnets (24-29) in such a manner that in each case they rest in homopolar configuration against both sides of each of the n inner pole shoes.

9. The bicycle lighting system according to claim 7 or claim 8, characterized in that said outer circuit (22) comprises n outer pole shoes (g-m) facing the n inner pole shoes (a-f) and projecting nose-shapedly toward the latter, the n outer pole shoes being structured such that each air gap between conjugate inner and outer pole shoes is the shortest possible path for the magnetic flux.

10. The bicycle lighting system according to claim 8, characterized in that each inner pole shoe (a-f) comprises in a mid-portion thereof a slot (31-36) extending in radial direction and forming an air gap, in order to reduce the mutual interference of the two magnets (24-29) laterally resting in each case against a respective inner pole shoe (a-f).

11. The bicycle lighting system according to claim 8 or claim 10, characterized in that the sum (a₁+a₂) of surfaces (a₁ and a₂) of the two lateral magnets (24-29) resting in each case against a respective inner pole shoe (a-f) is larger than a peripheral surface (b₁) of each inner pole shoe.

12. The bicycle lighting system according to claim 7, characterized in that said air-core coil (23) is divided per pole field into two identical coil sections (23.1-23.6) pole-correctly connected in series, that the inductance of said air-core coil (23) is lower than 150 µH, and that the coil resistance and the internal resistance of the dynamo generator (1) are smaller than 1.5 ohms.

13. The bicycle lighting system according to one of the claims 2 to 5, characterized in that said electronic circuitry (5) comprises a customized, integrated, solid-state switching circuit (50).

14. The bicycle lighting system according to one of the claims 2 to 5, characterized in that the power output at a travel speed of 3.5 to 5 kmph and under a load of 3 ohms is at least 3 W, and at a travel speed of 7 kmph is more than 4.5 W.

15. The bicycle lighting system according to one of the claims 7 to 12, characterized in that the generated output voltage of the dynamo generator (1) varies by approximately 0.8 to 1.2 V per variation-in-speed of 1 kmph.

16. The bicycle lighting system according to claim 1 or claim 7, characterized in that the dynamo generator (1) is realized as a side dynamo.

17. The bicycle lighting system according to claim 1 or claim 7, characterized in that the dynamo generator (1) is realized as a roller dynamo.

18. The bicycle lighting system according to one of the claims 1 to 5, characterized in that said electronic circuitry (5) is arranged together with the battery (4) in a housing apart from the dynamo generator (1).

19. The bicycle lighting system according to claim 18, characterized in that the separate housing (31) of said electronic circuitry (5) is mounted on a housing (30, 37) of the dynamo generator (1).

20. The bicycle lighting system according to one of the claims 1 to 5, characterized in that said electronic circuitry (5), the battery (4) and the dynamo generator (1) are together arranged in a two-part housing.

21. A generator comprising an inner circuit and an outer circuit, both of which are mounted to synchronously rotate in a same direction about a stationary stator and comprise, in each case, n poles in identical pole pitch, characterized in that said stator is a stationary air-core coil arranged between said inner circuit and said outer circuit, that said inner circuit comprises n inner pole shoes and that magnets are arranged in such a manner that they bear, in each case, in homopolar configuration against both sides of each of the n inner pole shoes, and that said outer circuit comprises n outer pole shoes facing the n inner pole shoes and projecting nose-shapedly to the latter, so that an air gap formed in each case between conjugate inner and outer pole shoes is the shortest path for the magnetic flux.

22. The generator according to claim 21, characterized in that the n inner pole shoes each comprise in a mid-portion thereof a slot forming an air gap extending in radial direction in order to reduce the mutual interference of the two magnets laterally resting against an inner pole shoe.

23. The generator according to claim 21, characterized in that the sum of the adjacent surfaces of the two lateral magnets bearing in each case against an inner pole shoe is larger than a peripheral surface of each inner pole shoe.

24. The generator according to claim 21, characterized in that the air-core coil is divided per pole field into two identical coil sections which are pole-correctly connected in series.

25. The generator according to claim 21, characterized in that the number of poles n is at least four, but preferably six.

## Revendications

1. Système d'éclairage pour bicyclettes comportant un système à dynamo monté sur une bicyclette et actionnable par la bicyclette en mouvement et constitué d'au moins un feu avant et d'au moins un feu arrière alimentés en puissance électrique à partir du système à dynamo, ainsi qu'un dispositif électronique convertissant en une tension continue régulée la puissance électrique générée par le système à dynamo en vue de produire de la lumière et de charger une batterie d'accumulateurs rechargeable, caractérisé par le fait que le système à dynamo contient un générateur à dynamo (1) disposé et structuré de manière à générer, à partir d'une vitesse de marche minima de 5 à 7 km/h environ, une puissance électrique suffisante en vue de charger la batterie d'accumulateurs (4) tout en alimentant simultanément le feu avant (2) et le feu arrière (3); que le dispositif électronique (5) contient un convertisseur ayant une fonction de survolteur et de dévolteur; et que le dispositif électronique (5) est en outre alimenté par la batterie d'accumulateurs (4) tant que la vitesse de marche n'atteint pas la vitesse minima de 5 à 7 km/h environ.

2. Système d'éclairage pour bicyclettes selon revendication 1, caractérisé par le fait que le disposif électronique (5) contient un dispositif transformateur de tension et limiteur d'énergie (10) faisant office de convertisseur, et un dispositif à seuil (12-17) percevant la tension de sortie redressée du générateur à dynamo (U_{eDYN}), agencés de façon que, quand le dispositif à seuil perçoit le dépassement d'une certaine valeur minimale de la tension du générateur à dynamo (1), la tension (U_{BATT}) fournie par la batterie d'accumulateurs (4) est appliquée en addition à la tension de sortie (U_{eDYN}) redressée du générateur à dynamo (1), via un dispositif électronique de commutation 16, au dispositif transformateur de tension et limiteur d'énergie (10); que la tension de sortie (Uₐ) du dispositif transformateur de tension et limiteur d'énergie (10) reste, lors de la marche sur batterie, à une première valeur constante (Uₐ₁) et, lors de la marche sur dynamo, à une seconde valeur constante (Uₐ₂) supérieure à la première valeur constante (Uₐ₁); et qu'un dispositif de charge de batterie (20) s'active quand la tension de sortie dépasse une tension de charge en sortie (U₀) comprise entre la première valeur constante (Uₐ₁) et la seconde valeur constante (Uₐ₂).

3. Système d'éclairage pour bicyclettes selon revendication 2, caractérisé par le fait que la première valeur constante (Uₐ₁) du dispositif électronique (5) est comprise dans un intervalle de 4 à 6 V, de préférence 4,5 à 6 V; et que la tension de charge en sortie (U₀) s'élève de préférence à 6,1 V.

4. Système d'éclairage pour bicyclettes selon revendication 2, caractérisé par le fait que le dispositif transformateur de tension et limiteur d'énergie (10) limite à une valeur constante comprise entre 4 et 6 W, de préférence entre 4,5 et 5 W, la puissance de sortie du dispositif électronique (5).

5. Système d'éclairage pour bicyclettes selon revendication 2, caractérisé par le fait que le dispositif électronique (5) comporte en outre:
- un circuit redresseur (11) servant à produire la tension de sortie du générateur à dynamo redressée et égalisée (U_{eDYN}) qui est appliquée au dispositif transformateur de tension et limiteur d'énergie (10);
- un premier réseau diviseur de tension (12, R₁, R₂) qui transforme en une première tension partielle (U_{T1}) une première tension de sortie, redressée et proportionnelle à la vitesse de marche, du générateur à dynamo (1), et applique cette tension partielle à un premier commutateur à seuil (13);
- un second réseau diviseur de tension (14, R₃, R₄) qui transforme en une seconde tension partielle (U_{T2}) la tension de sortie (U_{eDYN}), redressée et proportionnelle à la vitesse de marche, du générateur à dynamo (1), et applique cette tension partielle à un second commutateur à seuil (15),
le premier commutateur à seuil (13) appliquant la tension de batterie (U_{BATT}) au dispositif transformateur de tension et limiteur d'énergie (10) via le dispositif électronique de commutation (16) lorsque la tension redressée (U_{eDYN}) fournie par le générateur à Dynamo (1) dépasse une première tension de seuil perçue par le premier commutateur à seuil (13), et
le second commutateur à seuil (15) envoyant au dispositif transformateur de tension et limiteur d'énergie (10) un signal commandant le passage de sa tension de sortie de sa première valeur constante (Uₐ₁) à sa seconde valeur constante (Uₐ₂) et vice-versa lors de chaque passage, perçu par le second commutateur à seuil (15), au-dessus ou en dessous d'une seconde tension de seuil;
- un circuit de retard (17) relié à la sortie du premier commutateur à seuil (13) et au dispositif électronique de commutation (16) et qui ouvre ce dernier, après un certain retard prédéterminé, dès que la tension redressée (U_{eDYN}) fournie par le générateur à dynamo (1) devient inférieure à la première tension de seuil, afin de couper la tension (U_{BATT}) fournie par la batterie à l'entrée du dispositif transformateur de tension et limiteur d'énergie (10); et
- un transformateur chargeur de batterie (20) couplé en sortie avec le dispositif transformateur de tension et limiteur d'énergie (10) et qui demeure actif, en vue de charger la batterie (4) même pendant la marche sur batterie.

6. Système d'éclairage pour bicyclettes selon revendication 5, caractérisé par le fait qu'est annexé au système à dynamo un capteur (32) qui détermine que ce système à dynamo n'est pas prêt à fonctionner quand la dynamo est rabattue hors de sa position, et qui par suite émet alors un signal au dispositif électronique (5) afin de couper immédiatement l'alimentation du feu de position existant.

7. Système d'éclairage pour bicyclettes selon revendication 1, caractérisé par le fait que le générateur à dynamo (1) comporte un circuit intérieur (21) et un circuit extérieur (22), tous deux synchronisés et tournant dans le même sens autour d'une bobine à noyau d'air (23) constituée de bobines partielles (23.1-23.6), et que le circuit intérieur (21) et le circuit extérieur (22) présentent chacun n pôles (a-f) et (g-m) identiquement répartis.

8. Système d'éclairage pour bicyclettes selon revendication 7, caractérisé par le fait que le circuit intérieur (21) comporte n pièces polaires intérieures (a-f), et que n aimants permanents sont disposés entre ces pièces polaires intérieures (a-f) de telle manière qu'ils s'appliquent des deux côtés, homopolaire, contre chacune de celles-ci.

9. Système d'éclairage pour bicyclettes selon revendication 7 ou 8, caractérisé par le fait que le circuit extérieur (22) présente n pièces polaires extérieures (g-m) disposées vis-à-vis des pièces polaires intérieures (a-f), faisant saillie, telles autant de nez, en direction de celles-ci et conformées de telle façon que chaque entrefer entre les pièces polaires intérieures et extérieures se faisant face constitue toujours le parcours le plus court pour le flux magnétique.

10. Système d'éclairage pour bicyclettes selon revendication 8, caractérisé par le fait que chaque pièce polaire intérieure (a-f) présente en son milieu une fente (31-36) dirigée radialement et formant entrefer, afin de réduire l'influence mutuelle des deux aimants (24-29) appliqués latéralement contre la pièce polaire intérieure (a-f).

11. Système d'éclairage pour bicyclettes selon revendication 8 ou 10, caractérisé par le fait que la somme (a₁+a₂) des surfaces (a₁ et a₂) des deux aimants latéraux (24-29) appliquées contre chaque pièce polaire intérieure (a-f) est plus grande que la surface périphérique (b₁) de celle-ci.

12. Système d'éclairage pour bicyclettes selon revendication 7, caractérisé par le fait que la bobine à noyau d'air (23) est divisée par champ de pôle en deux sections (23.1-23.6) égales et montées en série dans l'ordre correspondant à celui des pôles; que l'inductance de la bobine à noyau d'air est inférieure à 150 uH; et que la résistance de la bobine et la résistance interne du générateur à dynamo (1) sont inférieures à 1,5 ohm.

13. Système d'éclairage pour bicyclettes selon une des revendications 2 à 5, caractérisé par le fait que le dispositif électronique (5) comporte un circuit intégré monolithique de commutation (50) spécifique aux exigences du client.

14. Système d'éclairage pour bicyclettes selon une des revendications 2 à 5, caractérisé par le fait que la puissance fournie dépasse 3 W aux vitesses de marche comprises entre 3,5 et 5 km/h, et 4,5 W à la vitesse de marche de 7 km/h.

15. Système d'éclairage pour bicyclettes selon une des revendications 7 à 12, caractérisé par le fait que la tension de sortie fournie par le générateur à dynamo (1) varie d'environ 0,8 à 1,2 V par variation de 1 km/h de la vitesse de marche.

16. Système d'éclairage pour bicyclettes selon revendication 1 ou 7, caractérisé par le fait que le générateur à dynamo (1) est réalisé comme dynamo latérale.

17. Système d'éclairage pour bicyclettes selon revendication 1 ou 7, caractérisé par le fait que le générateur à dynamo (1) est réalisé comme dynamo à cylindre.

18. Système d'éclairage pour bicyclettes selon une des revendications 1 à 5, caractérisé par le fait que le dispositif électronique (5) est installé conjointement avec la batterie (4) dans un boîtier séparé du générateur à dynamo (1).

19. Système d'éclairage pour bicyclettes selon revendication 18, caractérisé par le fait que le boîtier séparé (31) du dispositif électronique (5) est fixé au boîtier (30, 37) du générateur à dynamo (1).

20. Système d'éclairage pour bicyclettes selon une des revendications 1 à 5, caractérisé par le fait que le dispositif électronique (5), la batterie (4) et le générateur à dynamo (1) sont logés ensemble dans un boîtier en deux pièces.

21. Générateur comportant un circuit intérieur et un circuit extérieur, montés tous deux autour d'un stator fixe, tournant autour de celui-ci en synchronisme et dans le même sens, et présentant l'un et l'autre n pôles identiquement répartis, caractérisé par le fait que le stator est une bobine fixe à noyau d'air disposée entre les circuits intérieur et extérieur; que le circuit intérieur présente n pièces polaires intérieures et que des aimants sont disposés de façon à être appliqués chaque fois, homopolaire, contre les deux faces latérales de chaque pièce polaire intérieure; et que le circuit extérieur présente n pièces polaires extérieures disposées vis-à-vis des n pièces polaires intérieures et faisant saillie, telles des nez, en direction de celles-ci de façon que chaque entrefer ainsi formé entre les pièces polaires intérieure et extérieure se faisant face constitue le chemin le plus court pour le flux magnétique.

22. Générateur selon revendication 21, caractérisé par le fait que chaque pièce polaire intérieure présente en son milieu une fente dirigée radialement et formant entrefer, afin de réduire l'influence mutuelle des deux aimants appliqués latéralement contre la pièce polaire intérieure.

23. Générateur selon revendication 21, caractérisé par le fait que la somme des surfaces des deux aimants latéraux appliqués contre chaque pièce polaire intérieure est plus grande que la surface périphérique de celle-ci.

24. Générateur selon revendication 21, caractérisé par le fait que la bobine à noyau d'air est divisée, à raison d'une par groupe de pôles, en deux sections égales et montées en série dans l'ordre correspondant à celui des pôles.

25. Générateur selon revendication 21, caractérisé par le fait que le nombre n de pôles est d'au moins quatre, mais de préférence égal à six.
